# EUROPEAN PATENT APPLICATION

(11) **EP 4 586 394 A1**
(43) Date of publication of application: **16.07.2025**
(21) Application number: 23913976.9
(22) Date of filing: 04.01.2023
(51) Int. Cl.: H01M 50/593, H01M 50/586, H01M 50/533, H01M 50/536

(54) **BATTERY CELL, BATTERY AND ELECTRIC DEVICE**

(71) Applicant: Contemporary Amperex Technology (Hong Kong) Limited, Central (HK)
(72) Inventor: ZHOU, Wenlin, Ningde City, Fujian 352100 (CN); XU, Liangfan, Ningde City, Fujian 352100 (CN); ZHANG, Qianqian, Ningde City, Fujian 352100 (CN); LI, Quankun, Ningde City, Fujian 352100 (CN); WANG, Peng, Ningde City, Fujian 352100 (CN)
(74) Representative: Behr, Wolfgang
(86) International application number: PCT/CN2023/070423
(87) International publication number: WO 2024/145817

(57) **Abstract**

The present application provides a battery cell, a battery, and an electric device, belonging to the technical field of batteries. In the above, the battery cell includes a shell, lead-out components, electrode assemblies and an insulating bracket. The shell has a first wall, and the lead-out components are connected to the first wall. The electrode assemblies are accommodated in the shell. The electrode assembly includes a main body and tabs. The tabs are provided protruding from one end of the main body facing the first wall. The tabs are connected to the lead-out components. In the thickness direction of the first wall, the insulating bracket is provided between the first wall and the main body, and the insulating bracket is fixedly connected to the lead-out components. For the battery cell of this structure, the insulating bracket can be fastened to the first wall, such that the insulating bracket is fixed in the shell, to reduce the phenomenon of the insulating bracket moving or displacing during the use of the battery cell, thereby reducing the risk of the insulating bracket damaging the electrode assembly due to movement, improving the use stability and reliability of the battery cell, and further facilitating improving the use safety and service life of the battery cell.

## Description

### Technical Field

The present application relates to the field of battery technology, and specifically, to a battery cell, a battery, and an electric device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing, and as a core component of new energy vehicles, batteries have high requirements in terms of use safety and service life. A battery cell of the battery is usually obtained by assembling a positive electrode plate, a negative electrode plate and a separator into an electrode assembly (bare cell) in a winding or laminating manner, etc., then putting the bare cell into a shell, and finally injecting an electrolytic solution. However, the electrode assemblies of existing battery cells are often damaged during use, which can easily result in short circuit risk of the battery cells and lead to poor stability in use of the battery cells, which is not conducive to improving the use safety and service life of the battery cells.

### Summary

Embodiments of the present application provides a battery cell, a battery, and an electric device, which can effectively improve the use safety and service life of the battery cell.

In a first aspect, embodiments of the present application provide a battery cell, including a shell, lead-out components, at least one electrode assembly, and an insulating bracket, where the shell has a first part; the lead-out components are connected to the first wall; the at least one electrode assembly is accommodated in the shell, the electrode assembly has a main body and tabs, where the tabs are provided protruding from one end of the main body facing the first wall and are connected to the lead-out components; and in a thickness direction of the first wall, the insulating bracket is provided between the first wall and the main body, and the insulating bracket is fixedly connected to the lead-out components.

In the above technical solution, by making the insulating bracket fixedly connected to the lead-out components and the lead-out components connected to the first wall of the shell, the insulating bracket may be fastened to the first wall to fix the insulating bracket in the shell. The battery cell adopting this structure can reduce the phenomenon of the insulating bracket moving or displacing during the use of the battery cell, thereby reducing the risk of the insulating bracket damaging the electrode assembly due to movement, improving the use stability and reliability of the battery cell, and further facilitating improving the use safety and the service life of the battery cell.

In some embodiments, the battery cell further includes an adhesive member, and the adhesive member bonds with the insulating bracket and the lead-out component to make the insulating bracket fixedly connected with the lead-out component.

In the above technical solution, the battery cell is further provided with the adhesive member, and the insulating bracket is bonded to the lead-out component under action of the adhesive member, to realize the fixed connection between the insulating bracket and the lead-out component. For the battery cell adopting this structure, on the one hand, the assembling difficulty of connecting the insulating bracket to the lead-out components can be effectively reduced to fix the insulating bracket to the lead-out component, so as to effectively improve the assembly efficiency of the battery cell; and on the other hand, by connecting the insulating bracket with the lead-out component through the adhesive member, the connection stability and reliability between the insulating bracket and the lead-out component can be effectively improved.

In some embodiments, the insulating bracket is provided with a mounting hole, the mounting hole extends through the insulating bracket in the thickness direction of the first wall, and the mounting hole is used to accommodate at least a part of the adhesive member.

In the above technical solution, by providing on the insulating bracket the mounting hole for accommodating the adhesive member, which mounting hole extends through the insulating bracket in the thickness direction of the first wall, on the one hand, it is convenient to provide the adhesive member between the insulating bracket and the lead-out component through the mounting hole to achieve bonding between the insulating bracket and the lead-out component, which is conducive to reducing the assembling difficulty and improving the assembly efficiency; and on the other hand, by accommodating at least a part of the adhesive member in the mounting hole, the contact area between the adhesive member and the insulating bracket can be effectively increased, and the accommodating amount of the adhesive member can be increased, which is conducive to improving the stability and reliability of the insulating bracket being bonded to the lead-out component, so as to reduce the risk of the insulating bracket and the lead-out component falling off during use.

In some embodiments, the hole wall surface of the mounting hole is provided with a limiting part, and at least a part of the limiting part is embedded in the adhesive member.

In the above technical solution, a limiting part is provided protruding from the hole wall surface of the mounting hole and at least a part of the limiting part is embedded in the adhesive member, that is, the adhesive member covers the outer side of the limiting part, so that the limiting part can play a certain role of limiting the adhesive member in the thickness direction of the first wall, and can further increase the contact area between the adhesive member and the insulating bracket, so as to improve the bonding effect between the adhesive member and the insulating bracket, and further reduce the risk of the adhesive member and the insulating bracket falling off, which is beneficial to improve the connection reliability and stability between the insulating bracket and the lead-out component.

In some embodiments, the limiting part includes a separation body connected to the hole wall surface of the mounting hole, and the separation body is configured to separate the mounting hole into a first hole segment and a second hole segment arranged in the thickness direction of the first wall, with the first hole segment being closer to the lead-out component than the second hole segment, wherein the separation body is provided with a through hole extending in the thickness direction of the first wall, and the through hole communicates with the first hole segment and the second hole segment, and the first hole segment, the through hole and the second hole segment each accommodate a part of the adhesive member.

In the above technical solution, the limiting part has a separation body which is arranged in the mounting hole and connected to the hole wall surface of the mounting hole. The mounting hole can be divided by the separation body into a first hole segment and a second hole segment arranged in the thickness direction of the first wall, and the first hole segment communicates with the second hole segment by the through hole arranged in the separation body, to make the first hole segment, the second hole segment and the through hole each accommodate a part of the adhesive member, such that the insulating bracket adopting this structure can play a certain role of limiting the adhesive member through the separation body when injecting the adhesive member into the mounting hole, so as to keep the adhesive member in the first hole segment and the second hole segment, which is conducive to alleviating the phenomenon of the adhesive member flowing at random before solidification, and thereby improving the bonding effect of the adhesive member on the insulating bracket and the lead-out component.

In some embodiments, the adhesive member includes a first part, a second part, and a third part which are arranged and connected in sequence in the thickness direction of the first wall, the first part is located in the first hole segment and is bonded to the lead-out component, the second part is located in the through hole, and the third part is located in the second hole segment, wherein in the thickness direction of the first wall, at least a part of the separation body is located between the first part and the third part.

In the above technical solution, the adhesive member is provided as the first part, the second part and the third part which are arranged and connected in the thickness direction of the first wall in sequence, the first part and the third part are respectively located in the first hole segment and the second hole segment, and at least a part of the separation body is provided between the first part and the third part in the thickness direction of the first wall, that is, the sizes of the first part and the third part in the radial direction of the mounting hole are larger than the size of the second part in the radial direction of the mounting hole, so that the adhesive member presents an "H"-shaped structure, making the separation body play a certain limiting role on the adhesive member, facilitating further improving the connection reliability between the adhesive member and the insulating bracket, and then effectively improving the stability and reliability of the insulating bracket being bonded to the lead-out component through the adhesive member.

In some embodiments, in the thickness direction of the first wall, the thickness of the third part is H, satisfying 0.5mm≤H≤5mm.

In the above technical solution, the thickness of the third part in the thickness direction of the first wall is set to be 0.5mm to 5mm, which on the one hand, alleviates the phenomenon of insufficient structural strength of the third part caused by too small thickness of the third part and thus facilitates ensuring the limiting effect of the separation body on the adhesive member, and on the other hand, alleviates the phenomenon of material waste and excessive occupied space caused by too large thickness of the third part and facilitates reducing the manufacturing cost of the battery cell and optimizing the internal space of the battery cell.

In some embodiments, in the thickness direction of the first wall, the third part does not extend beyond one end of the second hole segment away from the separation body.

In the above technical solution, the third part is provided to not extend beyond the end of the second hole segment away from the separation body in the thickness direction of the first wall, that is, the third part is entirely accommodated in the second hole segment to reduce the phenomenon of the third part overflowing from the second hole segment, thereby facilitating alleviating the interference effect of the third part of the adhesive member on other components inside the battery cell.

In some embodiments, in the thickness direction of the first wall, the first part extends beyond one end of the first hole segment away from the separation body.

In the above technical solution, the first part is provided to extend beyond the end of the first hole segment away from the separation body in the thickness direction of the first wall, that is, the first part overflows from the first hole segment in the thickness direction of the first part, so as to facilitate the first part of the adhesive member bonding with the lead-out component on the first wall, to ensure improved bonding effect between the adhesive member and the lead-out component and further effectively improve the connection stability between the insulating bracket and the lead-out component.

In some embodiments, the limiting part further includes a first protrusion; the first protrusion is provided protruding from the separation body and embedded in the adhesive member, where the first protrusion is provided on at least one side of the separation body in the thickness direction of the first wall; and/or the first protrusion is provided on the hole wall surface of the through hole.

In the above technical solution, the separation body is provided with a first protrusion and the first protrusion is embedded in the adhesive member, that is, the adhesive member covers the outer side of the first protrusion, so that the first protrusion can play a certain limiting role on the adhesive member, so as to reduce occurrence of the phenomenon of circumferential rotation of the first protrusion in the mounting hole, thereby helping to reduce the risk that the adhesive member is separated from the insulating bracket and the lead-out component.

In some embodiments, in the thickness direction of the first wall, the first protrusion is provided protruding from one side of the separation body facing the first hole segment.

In the above technical solution, the first protrusion is provided at the side of the separation body facing the first hole segment, that is, the first protrusion is located in the first hole segment. For the insulating bracket adopting this structure, it is convenient for manufacturing and forming the first protrusion, which is beneficial to reduce the processing difficulty of the insulating bracket and is beneficial to improve the limiting effect of the first protrusion on the adhesive member.

In some embodiments, the separation body is provided with a plurality of first protrusions protruding therefrom, and the plurality of first protrusions are provided at intervals in a circumferential direction of the through hole.

In the above technical solution, the separation body is provided with the plurality of first protrusions and the first protrusions are arranged at intervals in the circumferential direction of the through hole, so as to facilitate further improving the limiting effect of the first protrusions on the adhesive member, to limit the circumferential rotation of the adhesive member in the mounting hole, thereby helping to ensure the bonding effect of the adhesive member on the insulating bracket and the lead-out component.

In some embodiments, the battery cell includes two lead-out components with opposite polarities, and the two lead-out components both are provided on the first wall, wherein the insulating bracket is provided with two mounting holes, the mounting holes are in one-to-one correspondence with the lead-out components, and the two mounting holes are each provided therein with the adhesive member.

In the above technical solution, the battery cell is provided with two lead-out components, two mounting holes are correspondingly provided on the insulating bracket, and the two mounting holes are each provided therein with the adhesive member, so that the insulating bracket can be bonded to both lead-out components, which is beneficial to further improve the connection stability and reliability of the insulating bracket connected to the lead-out components, so as to reduce occurrence of the phenomenon of movement or displacement of the insulating bracket during use.

In some embodiments, the lead-out component includes an electrode terminal and a current collecting member; the electrode terminal is connected to the first wall; in the thickness direction of the first wall, the current collecting member is located between the electrode terminal and the insulating bracket, and the current collecting member is connected to the electrode terminal and the tab, wherein the adhesive member bonds with the current collecting member and the insulating bracket.

In the above technical solution, the lead-out component is provided with an electrode terminal and the current collecting member connected with each other, the electrode terminal is connected to the first wall of the shell to realize outputting or inputting of the electric energy for the battery cell, and the current collecting member is provided between the electrode terminal and the insulating bracket, to facilitate the connection between the current collecting member and the tab of the electrode assembly, thereby realizing the electrical connection between the electrode assembly and the electrode terminal, which is beneficial to reduce the assembling difficulty between the electrode assembly and the lead-out component. In addition, the adhesive member is provided to bond the current collecting member and the insulating bracket, to make the insulating bracket fixedly connected to the lead-out component. The use of this structure is beneficial to reduce the assembling difficulty of bonding the insulating bracket and the lead-out component with each other through the adhesive member, and is beneficial to increase the bonding area of the adhesive member and the lead-out component, so as to improve the firmness of the insulating bracket being bonded to the lead-out component.

In some embodiments, the current collecting member is connected to the electrode terminal by welding to form a welding region, and the adhesive member covers at least a part of the welding region.

In the above technical solution, the adhesive member is provided to cover at least a part of the welding region formed by mutually welding the current collecting member and the electrode terminal, so that the adhesive member can play a certain role of blocking welding slags or metal particles formed by mutually welding the current collecting member and the electrode terminal, while realizing the mutual bonding between the adhesive member and the current collecting member, so as to alleviate the phenomenon of the welding slags or metal particles entering the interior of the electrode assembly, thereby helping to reduce the short circuit risk of the battery cell, so as to improve the use safety of the battery cell.

In some embodiments, the insulating bracket is provided with the mounting hole, the mounting hole extends through the insulating bracket in the thickness direction of the first wall, and the mounting hole is used to accommodate the adhesive member, where in the thickness direction of the first wall, the projection of the welding region is located in the mounting hole.

In the above technical solution, the insulating bracket is provided with the mounting hole for accommodating the adhesive member and the projection of the welding region, formed by mutually welding the current collecting member and the electrode terminal, in the thickness direction of the first wall is located in the mounting hole, so as to facilitate the adhesive member covering the welding region when injecting the adhesive member into the mounting hole, and facilitate reducing the assembling difficulty of the battery cell.

In some embodiments, the maximum size of the welding region in the radial direction of the mounting hole is D₁, and the diameter of the mounting hole is D₂, satisfying: 1.5≤D₂/D₁≤2.5.

In the above technical solution, the ratio of the diameter of the mounting hole to the size of the welding region in the radial direction of the mounting hole is set to be 1.5 to 2.5, that is, the diameter of the mounting hole is 1.5 to 2.5 times the size of the welding region in the radial direction of the mounting hole, which, on the one hand, can alleviate the phenomenon that the welding region cannot be effectively covered after the adhesive member is injected into the mounting hole due to a too small ratio, so as to ensure the covering effect of the adhesive member on the welding region, and on the other hand, can alleviate the phenomenon of the adhesive member flowing at random before solidification due to a too large ratio, so as to reduce the interference effect of the adhesive member on other components inside the battery cell.

In some embodiments, in the thickness direction of the first wall, the surface of the welding region facing the adhesive member is a rough surface.

In the above technical solution, the surface of the welding region facing the adhesive member is provided as the rough surface, that is, the surface of the welding region facing the adhesive member is an uneven surface, so as to facilitate improving the roughness of the surface of the welding region mutually bonded to the adhesive member, to increase the contact area between the adhesive member and the welding region, and then effectively improve the bonding firmness between the adhesive member and the welding region, so as to improve the connection stability and reliability of the insulating bracket and the lead-out component bracket.

In some embodiments, in the thickness direction of the first wall, the surface of the current collecting member mutually bonded to the adhesive member is provided with a plurality of printed grooves, and the printed grooves are used to accommodate a part of the adhesive member.

In the above technical solution, the surface of the current collecting member for being mutually bonded to the adhesive member is provided with the plurality of printed grooves, so as to facilitate increasing the roughness of the surface of the current collecting member mutually bonded to the adhesive member, to increase the contact area between the adhesive member and the current collecting member, and then effectively improve the bonding firmness between the adhesive member and the current collecting member, so as to improve the connection stability and reliability of the insulating bracket and the lead-out component bracket.

In some embodiments, the battery cell further includes a first insulating member; and in the thickness direction of the first wall, at least a part of the first insulating member is provided between the first wall and the current collecting member to insulate and isolate the first wall from the current collecting member.

In the above technical solution, the battery cell is further provided with the first insulating member, and at least a part of the first insulating member is provided between the first wall and the current collecting member in the thickness direction of the first wall, to insulate and isolate the first wall from the current collecting member, so as to facilitate reducing the risk of short circuit between the first wall and the current collecting member and thus improve the use safety of the battery cell.

In some embodiments, the first insulating member includes an insulating body and two second protrusions; in the thickness direction of the first wall, the insulating body is provided between the first wall and the current collecting member; and the two second protrusions are provided protruding from the side of the insulating body facing the current collecting member, and in the first direction, the two second protrusions are arranged at an interval, and an accommodation space is formed between the two second protrusions, the accommodation space is used to accommodate at least a part of the insulating bracket, and the first direction is perpendicular to the thickness direction of the first wall.

In the above technical solution, at least a part of the insulating bracket is accommodated in the accommodation space formed between the two second protrusions of the first insulating member, such that the insulating bracket can be limited and positioned to a certain extent, which, on the one hand, facilitates assembling the insulating bracket and playing a certain role of protecting the insulating bracket, and on the other hand, can further reduce the phenomenon of movement of the insulating bracket during the assembly or use of the battery cell, thereby reducing the risk of the insulating bracket damaging the electrode assembly due to the movement and further improving the use safety and service life of the battery cell.

In some embodiments, in the thickness direction of the first wall, the second protrusion has a first surface facing the main body, and the insulating bracket does not extend beyond the first surface.

In the above technical solution, the insulating bracket is provided to be not extend beyond the first surface of the second protrusion of the first insulating member in the thickness direction of the first wall, that is, the insulating bracket is entirely accommodated in the accommodation space, so that on the one hand, the limiting effect of the first insulating member on the insulating bracket can be improved, and it is beneficial to improve the protective effect of the first insulating member on the insulating bracket, and on the other hand, it can save the space occupied by the first insulating member and the insulating bracket, which is beneficial to optimize the internal space of the battery cell and improve the internal space utilization rate of the battery cell.

In some embodiments, the insulating bracket includes a body part and a protrusion part, the body part is accommodated in the accommodation space, and in the first direction, the protrusion part protrudes from at least one end of the body part; and in the thickness direction of the first wall, the second protrusion has a first surface facing the electrode assembly, and the first surface is provided with a groove, and in the first direction, the groove extends through the second protrusion and communicates with the accommodation space, the protrusion part extends into the groove, and abuts against the groove bottom surface of the groove.

In the above technical solution, the first surface of the second protrusion facing the main body is provided with the groove, and the groove extends through one side of the second protrusion in the first direction and communicates with the accommodation space, making the second protrusion be of a stepped structure, so that the body part of the insulating bracket is accommodated in the accommodation space, and the protrusion part of the insulating bracket is provided to extend into the groove, and the protrusion part abuts against the groove bottom surface of the groove, thus the second protrusion can play a certain limiting and positioning role on the insulating bracket in the thickness direction of the first wall, to improve the assembly quality between the insulating bracket and the first insulating member, and facilitate reducing the assembling difficulty.

In some embodiments, the protrusion part is provided spaced apart from the groove side surface of the groove, and the distance between the protrusion part and the groove side surface of the groove is L, satisfying 0.8mm≤L≤2mm.

In the above technical solution, the distance between the protrusion part of the insulating bracket and the groove side surface of the groove is set to be 0.8mm to 2mm, which on the one hand, can alleviate the phenomenon of too large assembling difficulty and too high assembly accuracy requirement of assembling the insulating bracket into the accommodation space and the groove caused by the too small distance between the protrusion part of the insulating bracket accommodated in the groove and the groove side surface of the groove, facilitating reducing the assembly difficulty between the insulating bracket and the first insulating member to improve the assembly efficiency, and on the other hand, can alleviate the phenomenon of poor limiting and positioning effect of the groove on the insulating bracket caused by too large distance between the protrusion part of the insulating bracket and the groove side surface of the groove.

In some embodiments, in the thickness direction of the first wall, the lead-out component is located at one side of the insulating bracket away from the main body, and the tab is bent around the insulating bracket and connected to the lead-out component.

In the above technical solution, the tab is provided as a structure that is bent around the insulating bracket and then connected to the lead-out component to achieve electrical connection between the electrode assembly and the lead-out component, thereby enabling the inputting or outputting of electrical energy for the battery cell. The battery cell using this structure enables the portion of the tab connected to the lead-out component to be located on the side of the insulating bracket away from the main body, thereby effectively alleviating the phenomenon of the tab being invertedly inserted into the main body of the electrode assembly during assembly or use, which is beneficial to reduce the short circuit risk of the battery cell and thereby improve the use safety of the battery cell. In addition, since the insulating bracket is fixedly connected to the lead-out component, the phenomenon that the insulating bracket moves or displaces during use of the battery cell can be effectively reduced, and further the risk of the insulating bracket destroying the shape of the tab or damaging the tab due to movement can be effectively reduced, thereby alleviating the phenomenon of the short circuit between the tab and other components or the connection failure between the electrode assembly and the lead-out component, and facilitating improving the use safety and service life of the battery cell.

In some embodiments, the shell includes a casing and an end cover, where an accommodation space with an opening is formed inside the shell, the electrode assemblies are accommodated in the accommodation space, the end cover seals the opening, and the end cover is the first wall.

In the above technical solution, the first wall for installing the lead-out component is an end cover for sealing the opening of the shell. The use of this structure makes it easy to assemble the lead-out component on the first wall and to connect the insulating bracket to the lead-out component, so as to reduce the difficulty of assembling the battery cell, thereby facilitating improving the production efficiency of the battery cell.

In some embodiments, the shell includes a casing and an end cover; the casing includes a side wall and the first wall which are integrally formed, the side wall is provided surrounding the first wall, the side wall has one end connected to the first wall and the other end defining the opening in the thickness direction of the first wall, the side wall and the first wall jointly define the accommodation cavity for accommodating the at least one electrode assembly, and the end cover seals the opening.

In the above technical solution, the first wall for installing the lead-out component is a wall of the shell arranged opposite to the end cover in the thickness direction of the first wall. The use of this structure can make the first wall equipped with the lead-out component be away from the end cover of the shell, so that there is no direct connection between the first wall and the end cover, thereby reducing the phenomenon that force generated when the lead-out component pulls or twists the first wall acts on the end cover, thereby reducing the risk of connection failure between the end cover and the shell, and further reducing the risk of leakage of the battery cell during use.

In a second aspect, embodiments of the present application further provide a battery, including at least one battery cell above.

In a third aspect, embodiments of the present application further provide an electric device, including at least one battery above.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other relevant drawings based on the drawings without paying creative efforts.
FIG. 1 is a schematic structural diagram of a vehicle provided by some embodiments of the present application;
FIG. 2 is a structural exploded view of a battery provided by some embodiments of the present application;
FIG. 3 is a schematic structural diagram of a battery cell provided by some embodiments of the present application;
FIG. 4 is a structural exploded view of a battery cell provided by some embodiments of the present application;
FIG. 5 is a local sectional view of a battery cell provided by some embodiments of the present application;
FIG. 6 is a local enlarged view of part A of the battery cell shown in FIG. 5;
FIG. 7 is a schematic structural diagram of an insulating bracket of a battery cell provided by some embodiments of the present application;
FIG. 8 is a local sectional view of an insulating bracket of a battery cell provided by some embodiments of the present application;
FIG. 9 is a local enlarged view of part B of the insulating bracket shown in FIG. 7;
FIG. 10 is a schematic structural diagram of a first insulating bracket of a battery cell provided by some embodiments of the present application;
FIG. 11 is a schematic view of connection of an insulating bracket and a first insulating member provided by some embodiments of the present application; and
FIG. 12 is a bottom view of an insulating bracket being connected to a first insulating member, provided by some embodiments of the present application.

Reference signs: 1000-vehicle; 100-battery; 10-box; 11-first box body; 12-second box body; 20-battery cell; 21-shell; 211-first wall; 2111-lead-out hole; 212-casing; 2121-opening; 213-end cover; 22-lead-out component; 221-electrode terminal; 222-current collecting member; 223-rivet block; 224-welding region; 23-electrode assembly; 231-main body; 232-tab; 24-insulating bracket; 241-mounting hole; 2411-first hole segment; 2412-second hole segment; 242-limiting part; 2421-separation body; 2421a-through hole; 2422-first protrusion; 243-body part; 244-protrusion part; 25-first insulating member; 251-insulating body; 252-second protrusion; 2521-first surface; 2522-groove; 253-accommodation space; 26-second insulating member; 27-sealing member; 28-pressure relief mechanism; 29-adhesive member; 291-first part; 292-second part; 293-third part; 200-controller; 300-motor; X-thickness direction of the first wall; Y-first direction.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, not all of the embodiments of the present application. Based on the embodiments in the present application, all other embodiments obtained by those of ordinary skill in the art without paying creative efforts fall within the scope of protection of the present application.

Unless otherwise defined, all technical and scientific terms used in the present application have the same meanings as commonly understood by those skilled in the art of the present application; the terms used in the description of the present application are for the purpose of describing specific examples only and are not intended to limit the present application; the terms "comprising/including" and "having" and any variations thereof in the description and claims of the present application and the above description of the drawings are intended to cover non-exclusive inclusion. The terms "first", "second", etc. in the description and claims of the present application or the above-mentioned drawings are used to distinguish different objects, rather than to describe a specific order or priority relationship

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments.

In the description of the present application, it should be indicated that unless otherwise clearly specified and limited, technical terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of simplicity, detailed descriptions of the same components in different embodiments are omitted. It should be understood that the thickness, length, width and other dimensions of various components, as well as the overall thickness, length, width and other dimensions of the integrated device, in the embodiments of the present application shown in the drawings are only illustrative and should not constitute any limitation to the present application.

"Multiple/plurality of" appearing in the present application means two or more (including two).

In the present application, the battery cell may include lithium ion secondary battery, lithium ion primary battery, lithium sulfur battery, sodium ion battery, or magnesium ion battery, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and soft-package battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box for packaging one or more battery cells or more battery modules. The box may prevent a liquid or other foreign object from affecting the charging or discharging of the battery cells.

The battery cell includes a shell, at least one electrode assembly and an electrolytic solution. The shell is used to accommodate the at least one electrode assembly and the electrolytic solution. The electrode assembly may include a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the part of the positive current collector not coated with the positive electrode active material layer is used as the positive electrode tab, so that the input of the electric energy into the positive electrode plate and the output of the electric energy from the positive electrode plate are realized through the positive electrode tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the part of the negative current collector not coated with the negative electrode active material layer is used as the negative electrode tab, so that the input of the electric energy into the negative electrode plate and the output of the electric energy from the negative electrode plate are realized through the negative electrode tab. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs may be multiple and the negative electrode tabs may be stacked together.

The material of the separator may be polypropylene (PP) or polyethylene (PE), etc. In addition, the electrode assembly structure may be a wound structure or may be a laminated/stacked structure, which is not limited in the embodiments of the present application.

The battery, which has outstanding advantages such as high energy density, low environmental pollution, high power density, long service life, wide application range, and small self-discharge coefficient, is an important part of the development of new energy today. A battery cell of the battery is usually obtained by assembling a positive electrode plate, a negative electrode plate and a separator into an electrode assembly (bare cell) in a winding or laminating manner, etc., then putting the bare cell into a shell, and finally injecting an electrolytic solution. However, with the continuous development of battery technology, higher requirements are also put forward for the safety performance and the service life of battery.

For a general battery cell, the shell of the battery cell usually includes a casing and an end cover, and the end cover covers the opening of the shell. In order to facilitate the assembly of the battery cell, the electrode terminal is usually assembled to the end cover of the battery cell, so that when the end cover covers the shell, the electrode terminal may be welded to the tab of the electrode assembly through the current collecting member in the shell, to achieve electrical connection between the electrode terminal and the electrode assembly, so that the electrode terminal is used as the output electrode of the battery cell to achieve inputting or outputting of electric energy for the battery cell, and finally the end cover is connected to the shell.

The inventors have found that the current collecting member usually serves to connect the electrode terminal and the tab of the electrode assembly. The current collecting member is disposed between the electrode terminal and the electrode assembly, so that the electrode terminal and the tab of the electrode assembly can be connected through the current collecting member. However, during the assembly or use of the battery cell adopting such structure, the current collecting member may cause certain compression on the tab, so that the phenomenon that the tab is invertedly inserted into the interior of the electrode assembly after compression easily occurs, which easily leads to the risk of short circuit of the battery cell and poor use stability of the battery cell. In order to solve the problem of the tab being inserted upside down (invertedly), in the prior art, an insulating bracket is usually provided between the electrode assembly and the current collecting member, so that the current collecting member is located on the side of the insulating bracket away from the electrode assembly, and the tab can be bent around the insulating bracket and then connected to the current collecting member, thereby effectively alleviating the phenomenon of the tab being inserted invertedly into the interior of the electrode assembly. However, in a battery cell of this structure, the insulating bracket may move or displace during the use of the battery cell, which may easily destroy the shape of the tab and even damage the electrode assembly, and then easily cause the phenomenon of a short circuit between the electrode assembly and other components or the connection failure between the electrode assembly and the electrode terminal, facilitating improving the use safety and service life of the battery cell.

Based on the above consideration, in order to solve the problems of low use safety and short service life of the battery cell, the inventors designed a battery cell after in-depth researches, the battery cell including a shell, lead-out components, at least one electrode assembly and an insulating bracket. The shell has a first wall, and the lead-out component is connected to the first wall. The at least one electrode assembly is accommodated in the shell. The electrode assembly has a main body and tabs. The tabs are provided protruding from one end of the main body facing the first wall. The tabs are connected to the lead-out components. In the thickness direction of the first wall, the insulating bracket is provided between the first wall and the main body, and the insulating bracket is fixedly connected to the lead-out components.

In the battery cell of this structure, by making the insulating bracket fixedly connected to the lead-out components and the lead-out components connected to the first wall of the shell, the insulating bracket may be fastened to the first wall to fix the insulating bracket in the shell. The battery cell adopting this structure can reduce the phenomenon of the insulating bracket moving or displacing during the use of the battery cell, thereby reducing the risk of the insulating bracket damaging the electrode assembly due to movement, improving the use stability and reliability of the battery cell, and further facilitating improving the use safety and service life of the battery cell.

The battery cell disclosed in the embodiments of the present application can be used in, but is not limited to, vehicles, ships, aircraft or other electric devices. The battery cells and batteries disclosed in the present application may be used to constitute the power supply system of the electric device. This is helpful to solve the problem that the electrode assembly is easily damaged during use, so as to improve the use safety and service life of the battery cells.

Embodiments of the present application provide an electric device using the battery as the power supply. The electric device may be, but not limited to a mobile phone, a panel computer, a notebook computer, an electric toy, an electric tool, an electric power cart, an electric vehicle, a ship, a spacecraft or the like. In the above, the electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by taking a vehicle 1000 as an electric device of an embodiment of the present application as example.

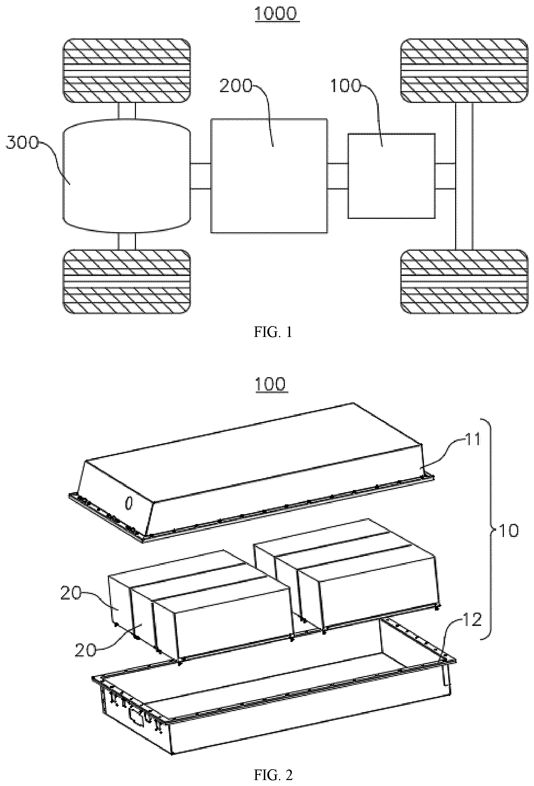

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom of the vehicle 1000, disposed at a head of the vehicle 1000, or disposed at a tail of the vehicle 1000. The battery 100 may be used for supplying power to the vehicle 1000. For example, the battery 100 may be used as an operation power supply or a use power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply or a use power supply of the vehicle 1000, but also as a driving power supply of the vehicle 1000 to replace or partially replace fuel or natural gas to provide driving power for the vehicle 1000.

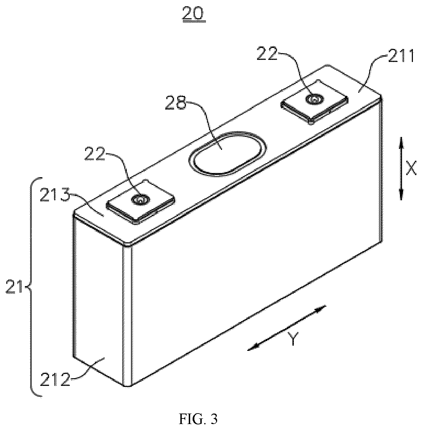

Referring to FIG. 2 and FIG. 3, FIG. 2 is a structural exploded view of a battery 100 provided by some embodiments of the present application; and FIG. 3 is a schematic structural diagram of a battery cell 20 provided by some embodiments of the present application. The battery 100 includes a box 10 and battery cells 20, and the battery cells 20 are accommodated in the box 10.

In the above, the box 10 is used to provide an assembly space for the battery cells 20, and the box 10 may be in a variety of structures. In some embodiments, the box 10 may include a first box body 11 and a second box body 12. The first box body 11 and the second box body 12 cover each other. The first box body 11 and the second box body 12 jointly define the assembly space for accommodating the battery cells 20. The second box body 12 may be in a hollow structure with one side open, and the first box body 12 may be in a plate-like structure. The first box body 11 covers the open side of the second box body 12, so that the first box body 11 and the second box body 12 jointly define an assembly space; and the first box body 11 and the second box body 12 may also be both in a hollow structure with one side open, and the open side of the first box body 11 covers the open side of the second box body 12. Of course, the box 10 formed by the first box body 11 and the second box body 12 may be in various shapes, such as a cylinder, a cuboid and so on. Exemplarily, in FIG. 2, the box 10 is in the shape of a cuboid.

In the battery 100, there may be one or more battery cells 20 provided in the box 10. If there are multiple battery cells 20 provided in the box 10, the multiple battery cells 20 may be in serial, parallel or hybrid connection with each other. The hybrid connection means that the multiple battery cells 20 are connected with each other both in series and in parallel. The plurality of battery cells 20 may be in direct serial, parallel or hybrid connection with each other, and then the whole composed of the plurality of battery cells 20 is accommodated in the box 10. Certainly, the battery 100 may be formed in the way that the plurality of battery cells 20 are first in serial or in parallel or in hybrid connection with each other to form battery modules, and then the plurality of battery modules are in serial or in parallel or in hybrid connection with each other to form a whole, and accommodated in the box 10. The battery 100 may further include other structures. For example, the battery 100 may further include a busbar component for connecting the multiple battery cells 20, to realize electrical connection between the multiple battery cells 20.

In the above, each battery cell 20 may be a secondary battery or a primary battery; and may also be a lithium-sulfur battery, a sodium-ion battery or a magnesium-ion battery, but is not limited thereto. The battery cell 20 may be in a shape of cylinder, flat body, cuboid or in other shape. Exemplarily, in FIG. 3, the battery cell 20 is in a cuboid structure.

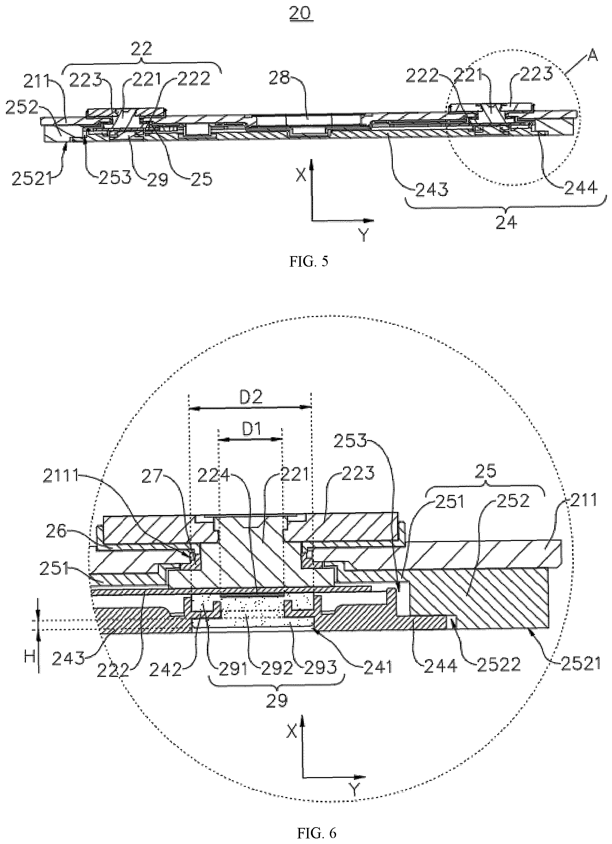

According to some embodiments of the present application, referring to FIG. 3, and further referring to FIG. 4, FIG. 5 and FIG. 6, FIG. 4 is a structural exploded view of a battery cell 20 provided by some embodiments of the present application; FIG. 5 is a local sectional view of a battery cell 20 provided by some embodiments of the present application; and FIG. 6 is a local enlarged view of part A of the battery cell 20 shown in FIG. 5. The present application provides a battery cell 20. The battery cell 20 includes a shell 21, lead-out components 22, electrode assemblies 23 and an insulating bracket 24. The shell 21 has a first wall 211, and the lead-out components 22 are connected to the first wall 211. The electrode assemblies 23 are accommodated in the shell 21. The electrode assembly 23 has a main body 231 and tabs 232. The tabs 232 are provided protruding from one end of the main body 231 facing the first wall 211. The tabs 232 are connected to the lead-out components 22. In the thickness direction X of the first wall, the insulating bracket 24 is provided between the first wall 211 and the main body 231, and the insulating bracket 24 is fixedly connected to the lead-out components 22.

In the above, the shell 21 may be further used to accommodate the electrolyte, e.g., electrolytic solution. The shell 21 may be in various structural form, such as a cylinder, a cuboid and so on. Similarly, the shell 21 may be made of a variety of materials, such as copper, iron, aluminum, steel, aluminum alloy, etc.

In some embodiments, the shell 21 may include a casing 212 and an end cover 213, wherein an accommodation cavity is formed inside the casing 212, and the accommodation cavity is used to accommodate the electrode assembly 23, and the accommodation cavity has an opening 2121, that is, the shell 212 is in a hollow structure with an opening 2121 at one end, and the end cover 213 covers the opening 2121 of the casing 212 and forms a sealed connection to form a sealed space for accommodating the electrode assemblies 23 and the electrolyte.

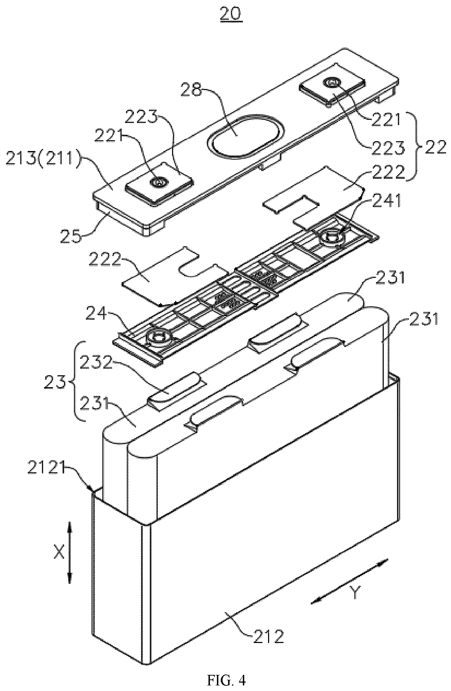

It should be noted that the first wall 211 for mounting the lead-out components 22 may be the end cover 213 or may be a wall of the casing 212. Exemplarily, in FIG. 3 and FIG. 4, the first wall 211 is the end cover 213. Certainly, the structure of the battery cell 20 is not limited thereto. In other embodiments, the first wall 211 may also be a bottom wall of the casing 212 provided opposite to the end cover 213, or the first wall 211 may also be the side wall of the casing 212 adjacent to and abutting against the end cover 213.

When assembling the battery cell 20, the electrode assemblies 23 may be placed in the casing 212 first, followed by filling the electrolyte into the casing 212 and then making the end cover 213 cover the opening 2121 of the casing 212, to complete the assembly of the battery cell 20.

The casing 212 may be in various shapes, such as a cylinder, a cuboid, or polygonal structure and so on. The shape of the casing 212 may be determined by the specific shape of the electrode assembly 23. For example, if the electrode assembly 23 is in a cylinder structure, the casing 212 may be selected to be in a cylinder structure; and if the electrode assembly 23 is in a cuboid structure, the casing 212 may be selected to be in a cuboid structure. Certainly, the end cover 213 may be in various structures. For example, the end cover 213 is of a plate-like structure or a hollow structure with one end open, or the like. Exemplarily, in FIG. 4, the battery cell 212 is in a cuboid structure.

Certainly, it can be understood that the shell 21 is not only limited to the above structure. The shell 21 may also be in other structures. For example, the shell 21 may include a casing 212 and two end covers 213. The casing 212 is of a hollow structure with openings 2121 at opposite sides thereof. One end cover 213 correspondingly covers one opening 2121 of the casing 212 and forms a sealed connection to form a sealed space for accommodating the electrode assemblies 23 and the electrolyte. That is, the casing 212 is provided with openings 2121 at opposite sides thereof, and the two end covers 213 respectively covers the two sides of the casing 212 to seal the corresponding openings 2121.

It should be indicated that the electrode assembly 23 is a component in the battery cell 20 where electrochemical reactions occur. The main body 231 of the electrode assembly 23 may include a positive electrode plate, a negative electrode plate, and a separator. In the above, the electrode assembly 23 may be in various structures. For example, the main body 231 of the electrode assembly 23 may be a wound structure formed by winding the positive electrode plate, the separator and the negative electrode plate, or may be in a laminated structure formed by stacking the positive electrode plate, the separator and the negative electrode plate. The tab 232 of the electrode assembly 23 is a component formed by stacking and connecting the regions of the positive electrode plate not coated with the positive electrode active material layer or a component formed by stacking and connecting the regions of the negative electrode plate not coated with the negative electrode active material layer.

The tab 232 protrudes from one end of the main body 231 facing the first wall 211, that is, the tab 232 is connected to one end of the main body 231 close to the first wall 211 in the thickness direction X of the first wall. That is, the tab 232 is formed at one end of the electrode assembly 23 close to the first wall 211 in the thickness direction X of the first wall. The tab 232 is used to be connected to the lead-out component 22 to implement inputting or outputting of electric energy for the battery cell 20.

Exemplarily, in FIG. 4, there are two tabs 232, and both tabs 232 are connected to the end of the main body 231 facing the first wall 211 in the thickness direction X of the first wall, and the two tabs 232 are respectively used to output or input the positive electrode and the negative electrode of the electrode assembly 23. If the tab 232 is used to output the positive electrode of the electrode assembly 23, the tab 232 is a component formed by stacking and connecting the regions of the positive electrode plate not coated with the positive electrode active material layer; and if the tab 232 is used to output the negative electrode of the electrode assembly 23, the tab 232 is a component formed by stacking and connecting the regions of the negative electrode plate not coated with the negative electrode active material layer.

There may be one or more electrode assemblies 23 accommodated in the shell 21. Exemplarily, in FIG. 4, the shell 21 of the battery cell 20 is provided with two electrode assemblies 23, and the main bodies 231 of the two electrode assemblies 23 are stacked in the thickness direction thereof, that is, the main bodies 231 of the two electrode assemblies 23 are stacked in the thickness direction of the battery cell 20. Certainly, in other embodiments, the electrode assemblies 23 accommodated in the shell 21 may also be stacked and in number of three, four, five, six, seven, etc.

In the thickness direction X of the first wall, the insulating bracket 24 is provided between the first wall 211 and the main body 231, that is, the insulating bracket 24 is located between the first wall 211 and the main body 231 of the electrode assembly 23 in the thickness direction X of the first wall, so as to serve to separate the first wall 211 from the main body 231 of the electrode assembly 23. In the above, the insulating bracket 24 is provided between the lead-out components 22 and the main bodies 231 in the thickness direction X of the first wall, so as to provide support for the main bodies 231 of the electrode assemblies 23, thereby increasing the force-bearing areas of the main bodies 231, which is conducive to reducing the risk of the main bodies 231 of the electrode assemblies 23 being damaged due to local force.

Exemplarily, the insulating bracket 24 may be made of a material such as plastic cement, rubber or silicone, or the like.

The lead-out component 22 is connected to the first wall 211 and serves to connect the tab 232 of the electrode assembly 23 to realize the inputting or outputting of the electric energy for the battery cell 20. The lead-out component 22 may be in various structures. In some embodiments, referring to what is shown in FIG. 4, FIG. 5 and FIG. 6, the battery cell 20 may include two lead-out components 22, the two lead-out components 22 are both mounted on the first wall 211, and the two lead-out components 22 are respectively connected to the two tabs 232 of the electrode assembly 23 to realize inputting or outputting of the positive electrode and the negative electrode of the battery cell 20.

In some embodiments, the lead-out component 22 may include an electrode terminal 221 and a current collecting member 222, the electrode terminal 221 is installed on the first wall 211, the current collecting member 222 is provided between the electrode terminal 221 and the insulating bracket 24 in the thickness direction X of the first wall, and is connected to the electrode terminal 221, and the current collecting member 222 is used to connect the tab 232 of the electrode assembly 23 to realize electrical connection between the electrode assembly 23 and the electrode terminal 221.

In the above, the insulating bracket 24 is fixedly connected to the lead-out component 22, that is, the insulating bracket 24 is connected to the lead-out component 22, to fix the insulating bracket 24 to the lead-out component 22. Optionally, the insulating bracket 24 may be connected to the lead-out component 22 by various ways, for example, the insulating bracket 24 may be fixedly connected to the current collecting member 222 of the lead-out component 22, or the insulating bracket 24 may be fixedly connected to the electrode terminal 221 of the lead-out component 22, to fix the insulating bracket 24 to the lead-out component 22. Similarly, the insulating bracket 24 may also be fixedly connected to the lead-out component 22 by various ways, for example, the insulating bracket 24 may be fixedly connected to the lead-out component 22 by means of bonding, snapping or bolting, etc. Certainly, the structure of the battery cell 20 is not limited thereto. In other embodiments, the lead-out component 22 may not be provided with the current collecting member 222, and the tab 232 of the electrode assembly 23 is directly connected to the electrode terminal 221. In the embodiment where the current collecting member 222 is not provided in the battery cell 20, the tab 232 of the electrode assembly 23 may be directly connected to the electrode terminal 221, and the insulating bracket 24 is fixedly connected to the electrode terminal 221 to fix the insulating bracket 24.

Optionally, the battery cell 20 may further include at least one first insulating member 25. In the thickness direction X of the first wall, at least a part of the first insulating member 25 is located between the first wall 211 and the current collecting member 222, to insulate and isolate the first wall 211 from the current collecting member 222, thereby facilitating reducing the risk of short circuit between the current collecting member 222 and the first wall 211.

Exemplarily, the first insulating member 25 may be made of a material such as plastic cement, rubber or silicone, or the like.

In FIG. 6, the first wall 211 is provided with lead-out holes 2111. The lead-out holes 2111 are provided in one-to-one correspondence with the electrode terminals 221 of the lead-out components 22. The lead-out hole 2111 extends in the thickness direction X of the first wall, and the lead-out hole 2111 extends through two sides of the first wall 211 in the thickness direction X of the first wall. Each electrode terminal 221 is correspondingly inserted into one lead-out hole 2111, to mount the electrode terminal 221 on the first wall 211. In the thickness direction X of the first wall, the electrode terminal 221 has one end connected to the current collecting member 222, and the other end used to be connected with the busbar component in the battery 100, to realize inputting or outputting of the electric energy for the battery cell 20.

In the above, the electrode terminal 221 is insulatively installed on the first wall 211, that is, there is no electrical connection formed between the electrode terminal 221 and the first wall 211. That is, there is no electrical connection formed between the electrode terminal 221 and the end cover 213 of the shell 21.

Optionally, the lead-out component 22 may further include a rivet block 223, where the rivet block 223 is provided on one side of the first wall 211 away from the first insulating member 25 in the thickness direction X of the first wall, and the rivet block 223 is connected to one end of the electrode terminal 221 away from the current collecting member 222 to fasten the electrode terminal 221 to the first wall 211.

In some embodiments, referring to FIG. 6, the battery cell 20 may further include second insulating members 26 and sealing members 27. In the thickness direction X of the first wall, at least a part of the second insulating member 26 is provided between the rivet block 223 and the first wall 211, to insulate and isolate the rivet block 223 from the first wall 211, thereby facilitating reducing the risk of short circuit between the rivet block 223 and the first wall 211. At least a part of the sealing member 27 is provided in the lead-out hole 2111, and the sealing member 27 is used to seal the gap between the electrode terminal 221 and hole wall of the lead-out hole 2111, so as to facilitate reducing the risk of leakage of electrolytic solution in the battery cell 20.

Exemplarily, the second insulating member 26 may be made of a material such as plastic cement, rubber or silicone, or the like. Similarly, the sealing member 27 may be made of various materials, such as plastic cement, rubber, or silicone or the like.

In some embodiments, the battery cell 20 may further include at least one pressure relief mechanism 28. The pressure relief mechanism 28 is mounted on the shell 21. Optionally, the pressure relief mechanism 28 may be provided on the end cover 213 or may be provided on the shell 212. Similarly, there may be one or more pressure relief mechanism 28 of the battery cell 20. The pressure relief mechanism 28 is used to release the internal pressure of the battery cell 20 when the internal pressure or temperature of the battery cell 20 reaches a predetermined value.

Exemplarily, the battery cell 20 is provided with only one pressure relief mechanism 28, and the pressure relief mechanism 28 is disposed on the end cover 213. The pressure relief mechanism 28 may be a pressure relief component such as an explosion-proof valve, an explosion-proof sheet, an air valve, a pressure relief valve or a safety valve, etc.

By making the insulating bracket 24 fixedly connected to the lead-out components 22 and the lead-out components 22 connected to the first wall 211 of the shell 21, the insulating bracket 24 may be fastened to the first wall 211 to fix the insulating bracket 24 in the shell 21. The battery cell 20 adopting this structure can reduce the phenomenon of the insulating bracket 24 moving or displacing during the use of the battery cell 20, thereby reducing the risk of the insulating bracket 24 damaging the electrode assembly 23 due to movement, improving the use stability and reliability of the battery cell 20, and further facilitating the use safety and service life of the battery cell 20.

According to some embodiments of the present application, referring to what is shown in FIG. 5 and FIG. 6, the battery cell 20 further includes an adhesive member 29, and the adhesive member 29 bonds with the insulating bracket 24 and the lead-out component 22 to make the insulating bracket 24 fixedly connected with the lead-out component 22.

In the above, the adhesive member 29 serves to bond the lead-out component 22 and the insulating bracket 24, so that the insulating bracket 24 can be fixedly connected to the lead-out component 22. The adhesive member 29 may be bonded to the current collecting member 222 of the lead-out component 22, or may be bonded to the electrode terminal 221 of the lead-out component 22. Exemplarily, in FIG. 6, the adhesive member 29 bonds the insulating bracket 24 and the current collecting member 222, that is, the insulating bracket 24 is bonded to the current collecting member 222 of the lead-out component 22 through the adhesive member 29.

Exemplarily, the adhesive member 29 may be of various types, for example, the adhesive member may be glue, adhesive tape, etc., or may be hot-melt rubber, plastic cement or plastic cement, etc. When the adhesive member 29 is hot-melt rubber, plastic cement or plastic cement, etc., that is, the adhesive member 29 is first heated and melted into a fluid state, so that the adhesive member 29 can bond the lead-out component 22 and the insulating bracket 24, and after the adhesive member 29 cools and solidifies, the lead-out component 22 and the insulating bracket 24 can be fastened together.

The battery cell 20 is further provided with the adhesive member 29, and the insulating bracket 24 is bonded to the lead-out component 22 under action of the adhesive member 29, to realize the fixed connection between the insulating bracket 24 and the lead-out component 22. For the battery cell 20 adopting this structure, on the one hand, the assembling difficulty of connecting the insulating bracket 24 to the lead-out components 22 can be effectively reduced to fix the insulating bracket 24 to the lead-out component 22, so as to effectively improve the assembly efficiency of the battery cell 20; and on the other hand, by connecting the insulating bracket 24 with the lead-out component 22 through the adhesive member 29, the connection stability and reliability between the insulating bracket 24 and the lead-out component 22 can be effectively improved.

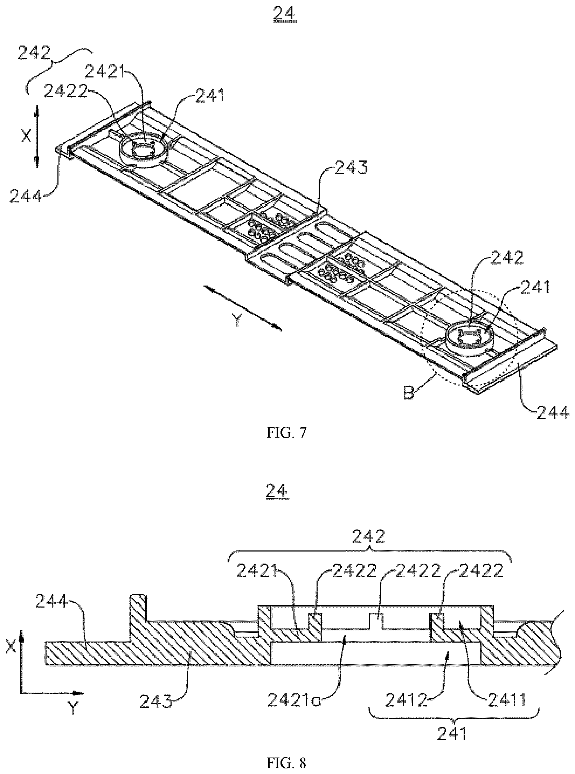

According to some embodiments of the present application, referring to FIG. 6, and further referring to FIG. 7 and FIG. 8, FIG. 7 is a schematic structural diagram of an insulating bracket 24 of a battery cell 20 provided by some embodiments of the present application; and FIG. 8 is a local sectional view of an insulating bracket 24 of a battery cell 20 provided by some embodiments of the present application. The insulating bracket 24 is provided with a mounting hole 241, the mounting hole 241 extends through the insulating bracket 24 in the thickness direction X of the first wall, and the mounting hole 241 is used to accommodate at least a part of the adhesive member 29.

In the above, the mounting hole 241 extends through the insulating bracket 24 in the thickness direction X of the first wall, that is, the mounting hole 241 extends in the thickness direction X of the first wall, and the two ends of the mounting hole 241 respectively extend through the two sides of the insulating bracket 24 in the thickness direction X of the first wall, so that after the adhesive member 29 is injected into the mounting hole 241, the adhesive member 29 contacts the lead-out component 22, and at least a part of the adhesive member 29 is accommodated in the mounting hole 241, so as to realize the adhesive connection between the insulating bracket 24 and the lead-out component 22.

The mounting hole 241 is used to accommodate at least a part of the adhesive member 29, that is, the adhesive member 29 may be entirely accommodated in the mounting hole 241, or a part of the adhesive member 29 may be accommodated in the mounting hole 241. Exemplarily, in FIG. 6, a part of the adhesive member 29 is accommodated in the mounting hole 241, and the adhesive member 29 extends, in the thickness direction X of the first wall, out of one end of the mounting hole 241 close to the lead-out component 22, so that the adhesive member 29 and the lead-out component 22 are bonded to each other.

By providing on the insulating bracket 24 the mounting hole 241 for accommodating the adhesive member 29, which mounting hole 241 extends through the insulating bracket 24 in the thickness direction X of the first wall, on the one hand, it is convenient to provide the adhesive member 29 between the insulating bracket 24 and the lead-out component 22 through the mounting hole 241 to achieve bonding between the insulating bracket 24 and the lead-out component 22, which is conducive to reducing the assembling difficulty and improving the assembly efficiency; and on the other hand, by accommodating at least a part of the adhesive member 29 in the mounting hole 241, the contact area between the adhesive member 29 and the insulating bracket 24 can be effectively increased, and the accommodating amount of the adhesive member 29 can be increased, which is conducive to improving the stability and reliability of the insulating bracket 24 being bonded to the lead-out component 22, so as to reduce the risk of the insulating bracket 24 and the lead-out component 22 falling off during use.

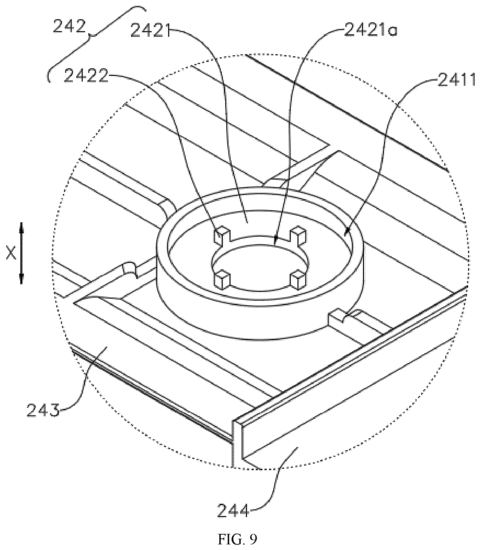

According to some embodiments of the present application, referring to FIG. 6, FIG. 7 and FIG. 8, and further referring to FIG. 9, FIG. 9 is a local enlarged view of part B of the insulating bracket 24 shown in FIG. 7. The hole wall surface of the mounting hole 241 is provided with a limiting part 242, and at least a part of the limiting part 242 is embedded in the adhesive member 29.

In the above, the hole wall surface of the mounting hole 241 is provided with a limiting part 242, that is, the limiting part 242 is connected with the hole wall surface of the mounting hole 241, and protrudes from the hole wall surface of the mounting hole 241.

At least a part of the limiting part 242 is embedded in the adhesive member 29, that is, the adhesive member 29 covers at least a part of the limiting part 242. Optionally, the limiting part 242 may be partially embedded in the adhesive member 29, or the limiting part 242 may be entirely embedded in the adhesive member 29. Exemplarily, in FIG. 6, the limiting part 242 is entirely embedded in the adhesive member 29, so as to facilitate improving the limiting effect of the limiting part 242 on the adhesive member 29.

The limiting part 242 is provided protruding from the hole wall surface of the mounting hole 241 and at least a part of the limiting part 242 is embedded in the adhesive member 29, so that the limiting part 242 can play a certain role of limiting the adhesive member 29 in the thickness direction X of the first wall, and can further increase the contact area between the adhesive member 29 and the insulating bracket 24, so as to improve the bonding effect between the adhesive member 29 and the insulating bracket 24, and further reduce the risk of the adhesive member 29 and the insulating bracket 24 falling off, which is beneficial to improve the connection reliability and stability between the insulating bracket 24 and the lead-out component 22.

According to some embodiments of the present application, referring to what is shown in FIG. 6, FIG. 8 and FIG. 9, the limiting part 242 includes a separation body 2421 connected to the hole wall surface of the mounting hole 241, and the separation body 2421 is configured to separate the mounting hole 241 into a first hole segment 2411 and a second hole segment 2412 arranged in the thickness direction X of the first wall, and the first hole segment 2411 is closer to the lead-out component 22 than the second hole segment 2412. The separation body 2421 is provided with a through hole 2421a extending in the thickness direction X of the first wall, the through hole 2421a communicates with the first hole segment 2411 and the second hole segment 2412, and the first hole segment 2411, the through hole 2421a and the second hole segment 2412 each accommodate a part of the adhesive member 29.

In the above, the separation body 2421 is configured to separate the mounting hole 241 into a first hole segment 2411 and a second hole segment 2412 arranged in the thickness direction X of the first wall. That is, the separation body 2421 is of a plate-like structure connected to the hole wall surface of the mounting hole 241 to separate the mounting hole 241 into two hole segments, namely the first hole segment 2411 and the second hole segment 2412 arranged in the thickness direction X of the first wall.

The separation body 2421 is provided with a through hole 2421a extending in the thickness direction X of the first wall, and the through hole 2421a communicates with the first hole segment 2411 and the second hole segment 2412, that is, the separation body 2421 is provided with a through hole 2421a extending through two sides of the separation body 2421 in the thickness direction X of the first wall, so that the first hole segment 2411 of the mounting hole 241 can communicate with the second hole segment 2412 of the mounting hole 241 through the through hole 2421a, so that the adhesive member 29 can be accommodated in the first hole segment 2411, the through hole 2421a and the second hole segment 2412, that is, the separation body 2421 is connected to the hole wall surface of the mounting hole 241, and the separation body 2421 is in an annular structure extending in the circumferential direction of the mounting hole 241, so as to achieve that the first hole segment 2411 and the second hole segment 2412 communicate with each other while the mounting hole 241 is separated into the first hole segment 2411 and the second hole segment 2412.

The limiting part 242 has a separation body 2421 which is arranged in the mounting hole 241 and connected to the hole wall surface of the mounting hole 241. The mounting hole 241 may be divided by the separation body 2421 into a first hole segment 2411 and a second hole segment 2412 arranged in the thickness direction X of the first wall, and the first hole segment 2411 communicates with the second hole segment 2412 by a through hole 2421a arranged in the separation body 2421, to make the first hole segment 2411, the second hole segment 2412 and the through hole 2412a each accommodate a part of the adhesive member 29, such that the insulating bracket 24 adopting this structure can play a certain role of limiting the adhesive member 29 through the separation body 2421 when injecting the adhesive member 29 into the mounting hole 241, so as to keep the adhesive member 29 in the first hole segment 2411 and the second hole segment 2412, which is conducive to alleviating the phenomenon of the adhesive member 29 flowing at random before solidification and thereby improves the bonding effect of the adhesive member 29 on the insulating bracket 24 and the lead-out component 22.

According to some embodiments of the present application, continuing to refer to FIG. 6, FIG. 8 and FIG. 9, the adhesive member 29 includes a first part 291, a second part 292, and a third part 293 which are arranged and connected in sequence in the thickness direction X of the first wall, the first part 291 is located in the first hole segment 2411 and is bonded to the lead-out component 22, the second part 292 is located in the through hole 2421a, and the third part 293 is located in the second hole segment 2412. In the thickness direction X of the first wall, at least a part of the separation body 2421 is located between the first part 291 and the third part 293.

In the above, the first part 291, the second part 292 and the third part 293 of the adhesive member 29 are located in the first hole segment 2411, the through hole 2421a and the second hole segment 2412 respectively, to make the first hole segment 2411, the through hole 2421a and the second hole segment 2412 all accommodate the adhesive member 29.

In the thickness direction X of the first wall, at least a part of the separation body 2421 is located between the first part 291 and the third part 293. That is, in FIG. 6, in the thickness direction X of the first wall, two sides of the separation body 2421 are provided with the first part 291 and the third part 293 respectively. That is, the sizes of the first part 291 and the third part 293 in the radial direction of the mounting hole 241 are both larger than the size of the second part 292 in the radial direction of the mounting hole 241, so that the cross section of the adhesive member 29 presents an "H"-shaped structure, to make the separation body 2421 play a good limiting role on the adhesive member 29.

The adhesive member 29 is provided as the first part 291, the second part 292 and the third part 293 which are arranged and connected in sequence in the thickness direction X of the first wall, the first part 291 and the third part 293 are respectively located in the first hole segment 2411 and the second hole segment 2412, and at least a part of the separation body 2421 is provided between the first part 291 and the third part 293 in the thickness direction X of the first wall, so that the separation body 2421 can play a certain limiting role on the adhesive member 29, which is conducive to further improving the connection reliability between the adhesive member 29 and the insulating bracket 24, and then can effectively improve the stability and reliability of the insulating bracket 24 being bonded to the lead-out component 22 through the adhesive member 29.

In some embodiments, referring to what is shown in FIG. 6, in the thickness direction X of the first wall, the thickness of the third part 293 is H, satisfying 0.5mm≤H≤5mm. That is, the size of the portion of the adhesive member 29 located in the second hole segment 2412 in the thickness direction X of the first wall is 0.5 mm to 5 mm.

Exemplarily, the thickness H of the first part 293 may be 0.5mm, 0.8mm, 1mm, 1.5mm, 2mm, 3mm, 4mm or 5mm, etc.

The thickness of the third part 293 in the thickness direction X of the first wall is set to be 0.5mm to 5mm, which on the one hand, alleviates the phenomenon of insufficient structural strength of the third part 293 caused by too small thickness of the third part 293 and thus facilitates ensuring the limiting effect of the separation body 2421 on the adhesive member 29, and on the other hand, alleviates the phenomenon of material waste and excessive occupied space caused by too large thickness of the third part 293 and facilitates reducing the manufacturing cost of the battery cell 20 and optimizing the internal space of the battery cell 20.

According to some embodiments of the present application, referring to what is shown in FIG. 6, in the thickness direction X of the first wall, the third part 293 does not extend beyond one end of the second hole segment 2412 away from the separation body 2421.

In the above, the third part 293 does not extend beyond the end of the second hole segment 2412 away from the separation body 2421, that is, the third part 293 of the adhesive member 29 is entirely accommodated in the second hole segment 2412, so that the adhesive member 29 does not extend beyond the end of the second hole segment 2412 away from the separation body 2421 in the thickness direction X of the first wall.

The third part 293 is provided to not extend beyond the end of the second hole segment 2412 away from the separation body 2421 in the thickness direction X of the first wall, that is, the third part 293 is entirely accommodated in the second hole segment 2412 to reduce the phenomenon of the third part 293 overflowing from the second hole segment 2412, thereby facilitating alleviating the interference effect of the third part 293 of the adhesive member 29 on other components inside the battery cell 20.

According to some embodiments of the present application, continuing to refer to what is shown in FIG. 6, in the thickness direction X of the first wall, the first part 291 extends beyond one end of the first hole segment 2411 away from the separation body 2421.

In the above, the first part 291 extends beyond the end of the first hole segment 2412 away from the separation body 2421, that is, the first part 291 of the adhesive member 29 has a portion accommodated in the first hole segment 2411, and the other portion extending out of one end of the first hole segment 2411 away from the separation body 2421 in the thickness direction X of the first wall, so that the adhesive member 29 has a portion extending beyond the end of the first hole segment 2411 away from the separation body 2421 in the thickness direction X of the first wall, to facilitate the adhesive member 29 and the lead-out component 22 bonding with each other.

The first part 291 is provided to extend beyond the end of the first hole segment 2411 away from the separation body 2421 in the thickness direction X of the first wall, such that the first part 291 overflows from the first hole segment 2411 in the thickness direction X of the first part, so as to facilitate the first part 291 of the adhesive member 29 bonding with the lead-out component 22 on the first wall 211, to ensure improved bonding effect between the adhesive member 29 and the lead-out component 22 and further effectively improve the connection stability between the insulating bracket 24 and the lead-out component 22.

According to some embodiments of the present application, referring to FIG. 6, FIG. 8 and FIG. 9, the limiting part 242 further includes a first protrusion 2422. The first protrusion 2422 is provided protruding from the separation body 2421 and embedded in the adhesive member 29.

In the above, the first protrusion 2422 is provided on at least one side of the separation body 2421 in the thickness direction X of the first wall; and/or, the first protrusion 2422 is provided on the hole wall surface of the through hole 2421a. That is, the first protrusion 2422 may be provided protruding from one side of the separation body 2421 in the thickness direction X of the first wall, or first protrusions 2422 may be provided protruding from two sides of the separation body 2421 in the thickness direction X of the first wall, or the first protrusion 2422 may be provided protruding from the hole wall surface of the through hole 2421a of the separation body 2421. Optionally, the number of those provided on the separation body 2421 may be one or more.

The first protrusion 2422 is embedded in the adhesive member 29, that is, the first protrusion 2422 is accommodated in the adhesive member 29. That is, the adhesive member 29 covers the outer side of the first protrusion 2422.

The separation body 2421 is provided with a first protrusion 2422 and the first protrusion 2422 is embedded in the adhesive member 29, so that the first protrusion 2422 can play a certain limiting role on the adhesive member 29, so as to reduce occurrence of the phenomenon of circumferential rotation of the first protrusion 2422 in the mounting hole 241, thereby helping to reduce the risk that the adhesive member 29 is separated from the insulating bracket 24 and the lead-out component 22.

In some embodiments, referring to what is shown in FIG. 8 and FIG. 9, in the thickness direction X of the first wall, the first protrusion 2422 is provided protruding from one side of the separation body 2421 facing the first hole segment 2411.

In the above, the first protrusion 2422 is provided protruding from the side of the separation body 2421 facing the first hole section 2411, that is, in the thickness direction X of the first wall, the first protrusion 2422 is provided on the side of the separation body 2421 facing the lead-out component 22. Certainly, in other embodiments, the first protrusion 2422 may also be provided on one side of the separation body 2421 facing the second hole segment 2412.

The first protrusion 2422 is provided at the side of the separation body 2421 facing the first hole segment 2411, that is, the first protrusion 2422 is located in the first hole segment 2411. For the insulating bracket 24 adopting this structure, it is convenient for manufacturing and forming the first protrusion 2422, which is beneficial to reducing the processing difficulty of the insulating bracket 24 and is beneficial to improving the limiting effect of the first protrusion 2422 on the adhesive member 29.

In some embodiments, continuing to refer to what is shown in FIG. 8 and FIG. 9, the separation body 2421 is provided with a plurality of first protrusions 2422 protruding therefrom, and the plurality of first protrusions 2422 are provided at intervals in a circumferential direction of the through hole 2421a.

Exemplarily, in FIG. 9, the separation body 2421 is provided with four first protrusions 2422, and the four first protrusions 2422 are provided at intervals in a circumferential direction of the through hole 2421a. Certainly, in other embodiments, the number of the first protrusions 2422 provided on the separation body 2421 may also be two, three, five, six, or seven, etc.

The separation body 2421 is provided with the plurality of first protrusions 2422 and the first protrusions 2422 are arranged at intervals in the circumferential direction of the through hole 2421a, so as to facilitate further improving the limiting effect of the first protrusions 2422 on the adhesive member 29, to limit the circumferential rotation of the adhesive member 29 in the mounting hole 241, thereby helping to ensure the bonding effect of the adhesive member 29 on the insulating bracket 24 and the lead-out component 22.

According to some embodiments of the present application, referring to what is shown in FIG. 4 and FIG. 7, the battery cell 20 includes two lead-out components 22 with opposite polarities, and the two lead-out components 22 are both provided on the first wall 211. The insulating bracket 24 is provided with two mounting holes 241, the two mounting holes 241 are provided in one-to-one correspondence with the lead-out components 22, and the two mounting holes 241 each accommodate therein an adhesive member 29.

In the above, the battery cell 20 includes two lead-out components 22 with opposite polarities, that is, the two lead-out components 22 are respectively used as the positive output electrode and the negative output electrode of the battery cell 20, and the two lead-out components 22 are made to be respectively connected to the two tabs 232 of the electrode assembly 23 to realize inputting or outputting of the positive electrode and the negative electrode of the battery cell 20 respectively.

In FIG. 4 and FIG. 7, the insulating bracket 24 is respectively provided with two mounting holes 241 corresponding to the two lead-out components 22, so that the two mounting holes 241 may be each injected with the adhesive member 29, that is, the adhesive member 29 accommodated in one mounting hole 241 is bonded to one lead-out component 22, and the adhesive member 29 accommodated in the other mounting hole 241 is bonded to the other lead-out component 22, so as to achieve the bonding of the insulating bracket 24 to the both lead-out components 22.

The battery cell 20 is provided with two lead-out components 22, two mounting holes 241 are correspondingly provided on the insulating bracket 24, and the two mounting holes 241 are each provided therein with the adhesive member 29, so that the insulating bracket 24 can be bonded to both lead-out components 22, which is beneficial to further improve the connection stability and reliability of the insulating bracket 24 connected to the lead-out components 22, so as to reduce the phenomenon of movement or displacement of the insulating bracket 24 during use.

According to some embodiments of the present application, referring to what is shown in FIG. 4, FIG. 5 and FIG. 6, the lead-out component 22 includes an electrode terminal 221 and a current collecting member 222. The electrode terminal 221 is connected to the first wall 211; in the thickness direction X of the first wall, the current collecting member 222 is located between the electrode terminal 221 and the insulating bracket 24, and the current collecting member 222 is connected to the electrode terminal 221 and the tab 232, where the adhesive member 29 bonds the current collecting member 222 and the insulating bracket 24.

In the above, the electrode terminal 221 serves to output or input the electric energy for the battery cell 20. The electrode terminal 221 may be made of a variety of materials, such as copper, iron, aluminum, steel, aluminum alloy, etc. Similarly, the current collecting member 222 serves to connect the tab 232 and the electrode terminal 221. The current collecting member 222 may be made of a variety of materials, such as copper, iron, aluminum, steel, or aluminum alloy, etc.

The current collecting member 222 is located between the electrode terminal 221 and the insulating holder 24 in the thickness direction X of the first wall, that is, the electrode terminal 221 and the insulating holder 24 are located on two sides of the current collecting member 222 in the thickness direction X of the first wall.

The current collecting member 222 connects the electrode terminal 221 and the tab 232, to achieve electrical connection between the tab 232 and the electrode terminal 221. Optionally, the current collecting member 222 may be connected to the electrode terminal 221 and the tab 232 in various ways, e.g., welding, snapping or abutting, etc.

The adhesive member 29 bonds the lead-out component 222 and the insulating bracket 24, so that the insulating bracket 24 is fixed to the lead-out component 22. Certainly, in other embodiments, the lead-out component 22 may be not provided with the current collecting member 222, and the tab 232 of the electrode assembly 23 is directly connected to the electrode terminal 221. In this embodiment, the tab 232 of the electrode assembly 23 may be directly connected to the electrode terminal 221, and the adhesive member 29 may directly bond with the electrode terminal 221 and the insulating bracket 24, to fix the insulating bracket 24.

The lead-out component 22 is provided with an electrode terminal 221 and the current collecting member 222 connected with each other, and the electrode terminal 221 is connected to the first wall 211 of the shell 21 to realize outputting or inputting of the electric energy for the battery cell 20, and the current collecting member 222 is provided between the electrode terminal 221 and the insulating bracket 24 to facilitate the connection between the current collecting member 222 and the tab 232 of the electrode assembly 23, thereby realizing the electrical connection between the electrode assembly 23 and the electrode terminal 221, which is beneficial to reduce the assembling difficulty between the electrode assembly 23 and the lead-out component 22. In addition, the adhesive member 29 is provided to bond with the current collecting member 222 and the insulating bracket 24, to make the insulating bracket 24 fixedly connected to the lead-out component 22. The use of this structure is beneficial to reduce the assembling difficulty of the insulating bracket 24 and the lead-out component 22 bonding with each other through the adhesive member 29, and is beneficial to increase the bonding area of the adhesive member 29 and the lead-out component 22, so as to improve the firmness of the insulating bracket 24 being bonded to the lead-out component 22.

According to some embodiments of the present application, referring to what is shown in FIG. 6, the current collecting member 222 is connected to the electrode terminal 221 by welding to form a welding region 224, and the adhesive member 29 covers at least a part of the welding region 224.

In the above, the current collecting member 222 is connected to the electrode terminal 221 by welding to form a welding area 224, that is, a weld mark formed by welding the current collecting member 222 and the electrode terminal 221 to each other is the welding region 224.

The adhesive member 29 covers at least a part of the welding region 224, that is, the adhesive member 29 may cover a part of the welding region 224, or may completely cover the welding region 224. Exemplarily, in FIG. 6, the adhesive member 29 completely covers the welding region 224, that is, the entire welding region 224 is bonded to the adhesive member 29.

The adhesive member 29 is provided to cover at least a part of the welding region 224 formed by welding the current collecting member 222 and the electrode terminal 221 to each other, so that the adhesive member 29 can play a certain role of blocking welding slags or metal particles formed by welding the current collecting member 222 and the electrode terminal 21 to each other, while realizing the mutual bonding between the adhesive member 29 and the current collecting member 222, so as to alleviate the phenomenon of the welding slags or metal particles entering the interior of the electrode assembly 23, thereby helping to reduce the short circuit risk of the battery cell 20, so as to improve the use safety of the battery cell 20.

According to some embodiments of the present application, continuing to refer to what is shown in FIG. 6, the insulating bracket 24 is provided with mounting holes 241, each mounting hole 241 extends through the insulating bracket 24 in the thickness direction X of the first wall, and the mounting hole 241 is used to accommodate the adhesive member 29. In the thickness direction X of the first wall, the projection of the welding region 224 is located inside the mounting hole 241.

In the above, in the thickness direction X of the first wall, the projection of the welding region 224 is located inside the mounting hole 241. That is, in the thickness direction X of the first wall, the range of the region defined by the mounting hole 241 may cover the welding region 224.

The insulating bracket 24 is provided with the mounting hole 241 for accommodating the adhesive member 29 and the projection of the welding region 224, formed by mutually welding the current collecting member 222 and the electrode terminal 221, in the thickness direction X of the first wall is provided to be located in the mounting hole 241, so as to facilitate the adhesive member 29 covering the welding region 224 when injecting the adhesive member 29 into the mounting hole 241, and facilitate reducing the assembling difficulty of the battery cell 20.

In some embodiments, referring to what is shown in FIG. 6, the maximum size of the welding region 224 in the radial direction of the mounting hole 241 is D₁, and the diameter of the mounting hole 241 is D₂, satisfying: 1.5≤D₂/D₁≤2.5.

In the above, 1.5≤D₂/D₁≤2.5, that is, the diameter of the mounting hole 241 is 1.5 to 2.5 times the maximum size of the welding region 224 in the radial direction of the mounting hole 241. Exemplarily, the diameter of the mounting hole 241 may be 1.5 times, 1.8 times, 2 times, 2.2 times, 2.5 times, etc., the maximum size of the welding region 224 in the radial direction of the mounting hole 241.

The ratio of the diameter of the mounting hole 241 to the size of the welding region 224 in the radial direction of the mounting hole 241 is set to be 1.5 to 2.5, which, on the one hand, can alleviate the phenomenon that the welding region 224 cannot be effectively covered after the adhesive member 29 is injected into the mounting hole 241 due to a too small ratio, so as to ensure the covering effect of the adhesive member 29 on the welding region 224, and on the other hand, can alleviate the phenomenon of the adhesive member 29 flowing at random before solidification due to a too large ratio, so as to reduce the interference effect of the adhesive member 29 on other components inside the battery cell 20.

In some embodiments, in the thickness direction X of the first wall, the surface of the welding region 224 facing the adhesive member 29 is a rough surface. That is, the surface of the welding region 224 facing the adhesive member 29 is an uneven surface.

The surface of the welding region 224 facing the adhesive member 29 is provided as the rough surface, so as to facilitate increasing the roughness of the surface of the welding region 224 mutually bonded to the adhesive member 29, to increase the contact area between the adhesive member 29 and the welding region 224, and then effectively improve the bonding firmness between the adhesive member 29 and the welding region 224, so as to improve the connection stability and reliability of the insulating bracket 24 and the lead-out component 22 bracket.

In some embodiments, in the thickness direction X of the first wall, the surface of the current collecting member 222 mutually bonded to the adhesive member 29 is provided with a plurality of printed grooves, and the printed grooves are each used to accommodate a part of the adhesive member. In the above, the specific structure of the printed groove may be found in the relevant technology, which is not described here.

The surface of the current collecting member 222 for being bonded to the adhesive member 29 is provided with the plurality of printed grooves, so as to facilitate increasing the roughness of the surface of the current collecting member 222 mutually bonded to the adhesive member 29, to increase the contact area between the adhesive member 29 and the current collecting member 222, and then effectively improve the bonding firmness between the adhesive member 29 and the current collecting member 222, so as to improve the connection stability and reliability of the insulating bracket 24 and the lead-out component 22 bracket.

According to some embodiments of the present application, referring to what is shown in FIG. 4, FIG. 5 and FIG. 6, the battery cell 20 may further include a first insulating member 25; and in the thickness direction X of the first wall, at least a part of the first insulating member 25 is provided between the first wall 211 and the current collecting member 222 to insulate and isolate the first wall 211 from the current collecting member 222.

In the above, at least a part of the first insulating member 25 is provided between the first wall 211 and the current collecting member 222, that is, the first insulating member 25 has a portion located between the first wall 211 and the current collecting member 222 in the thickness direction X of the first wall, so that the first insulating member 25 can play a role of insulating and isolating the first wall 211 from the current collecting member 222.

Exemplarily, the first insulating member 25 may be made of various materials such as rubber, silicone, or plastic cement or the like.

The battery cell 20 is further provided with the first insulating member 25, and at least a part of the first insulating member 25 is provided between the first wall 211 and the current collecting member 222 in the thickness direction X of the first wall, to insulate and isolate the first wall 211 from the current collecting member 222, so as to facilitate reducing the risk of short circuit between the first wall 211 and the current collecting member 222 and thus improve the use safety of the battery cell 20.

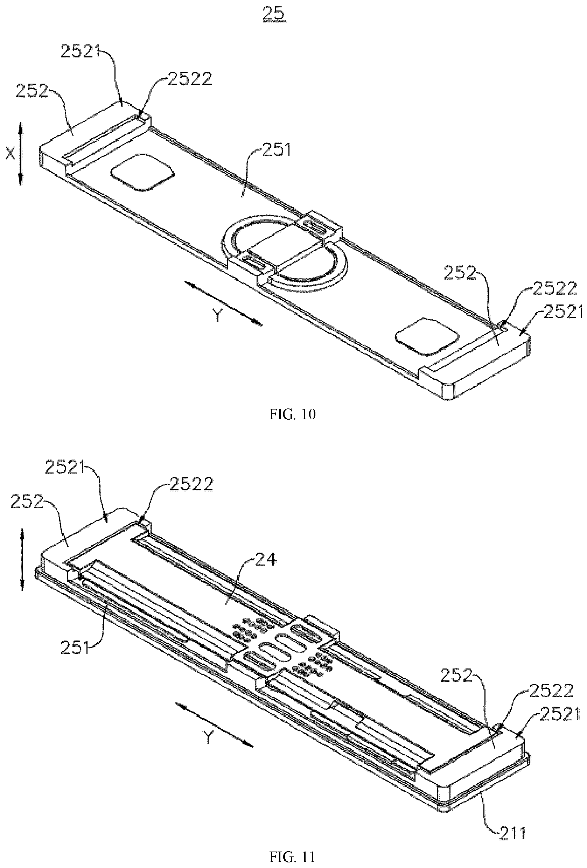

According to some embodiments of the present application, referring to FIG. 6, and further referring to FIG. 10 and FIG. 11, FIG. 10 is a schematic structural diagram of a first insulating bracket 25 of a battery cell 20 provided by some embodiments of the present application; and FIG. 11 is a schematic view of connection of an insulating bracket 24 and a first insulating member 25 provided by some embodiments of the present application. The first insulating member 25 includes an insulating body 251 and two second protrusions 252. In the thickness direction X of the first wall, the insulating body 251 is provided between the first wall 211 and the current collecting member 222. The two second protrusions 252 are provided protruding from the side of the insulating body 251 facing the current collecting member 222, and in the first direction Y, the two second protrusions 252 are arranged at an interval, and an accommodation space 253 is formed between the two second protrusions 252, the accommodation space 253 is used to accommodate at least a part of the insulating bracket 24, and the first direction Y is perpendicular to the thickness direction X of the first wall first surface 2521 first surface 2521.

In the above, an accommodation space 253 is formed between the two second protrusions 252, the accommodation space 253 is used to accommodate at least a part of the insulating bracket 24, and the insulating bracket 24 is accommodated between the two second protrusions 252 of the first insulating member 25 in the first direction Y. The first surface 2521 of the first surface 2521

The accommodation space 253 is used to accommodate at least a part of the insulating bracket 24, that is, in the thickness direction X of the first wall, the insulating bracket 24 may be entirely accommodated in the accommodating space 253, or the insulating bracket 24 may be partially accommodated in the accommodating space 253.

At least a part of the insulating bracket 24 is accommodated in the accommodation space 253 formed between the two second protrusions 252 of the first insulating member 25, **first surface 2521,** such that the insulating bracket 24 can be limited and positioned to a certain extent, which, on the one hand, facilitates assembling the insulating bracket 24 and playing a certain role of protecting the insulating bracket 24, and on the other hand, can further reduce the phenomenon of movement of the insulating bracket 24 during the assembly or use of the battery cell 20, thereby reducing the risk of the insulating bracket 24 damaging the electrode assembly 23 due to the movement and further improving the use safety and service life of the battery cell 20.

In some embodiments, referring to what is shown in FIG. 6 and FIG. 11, in the thickness direction X of the first wall, the second protrusion 252 has a first surface 2521 facing the main body 231, and the insulating bracket 24 does not extend beyond the first surface 2521.

In the above, the insulating bracket 24 does not extend beyond the first surface 2521, that is, the insulating bracket 24 is entirely accommodated between two second protrusions 252, such that the insulating bracket 24 has no portion extending beyond the first surface 2521 of the second protrusion 252 in the thickness direction X of the first wall. Certainly, in other embodiments, the insulating bracket 24 may also be partially accommodated between two second protrusions 252, such that the insulating bracket 24 has a portion extending beyond the first surface 2521 of the second protrusion 252 in the thickness direction X of the first wall.

The insulating bracket 24 is provided to not extend beyond the first surface 2521 of the second protrusion 252 of the first insulating member 25 in the thickness direction X of the first wall, that is, the insulating bracket 24 is entirely accommodated in the accommodation space 253, so that on the one hand, the limiting effect of the first insulating member 25 on the insulating bracket 24 can be improved, and it is beneficial to improve the protective effect of the first insulating member 25 on the insulating bracket 24, and on the other hand, it can save the space occupied by the first insulating member 25 and the insulating bracket 24, which is beneficial to optimize the internal space of the battery cell 20 and improve the internal space utilization rate of the battery cell 20.

According to some embodiments of the present application, referring to what is shown in FIG. 5, FIG. 6, FIG. 7 and FIG. 10, the insulating bracket 24 includes a body part 243 and a protruding part 244, the body part 243 is accommodated in the accommodating space 253, and in the first direction Y, the protruding part 244 protrudes from at least one end of the body part 243. In the thickness direction X of the first wall, the second protrusion 252 has a first surface 2521 facing the electrode assembly 23, and the first surface 2521 is provided with a groove 2522, and in the first direction Y, the groove 2522 extends through the second protrusion 252 and communicates with the accommodation space 253, the protrusion part 2544 extends into the groove 252, and abuts against the groove bottom surface of the groove 2522.

In the above, the mounting hole 241 is provided on the body part 243 of the insulating bracket 24 and extends through two sides of the body part 243 in the thickness direction X of the first wall.

In the first direction Y, the protrusion part 244 protrudes from at least one end of the body part 243, that is, the body part 243 may have one end provided with the protrusion part 244 in the first direction Y, or may also have two ends each provided with the protrusion part 244 in the first direction Y. Exemplarily, in FIG. 5 and FIG. 7, the insulating bracket 24 includes two protrusion parts 244, and the two protrusion parts 244 are respectively provided protruding from two ends of the body part 243 in the first direction Y.

In the first direction Y, the groove 2522 extends through the second protrusion 252 and communicates with the accommodation space 253, and the protrusion parts 244 extends into the groove 2522. That is, the groove 2522 provided on the first surface 2521 of the second protrusion 252 extends through one side of the second protrusion 252 facing the accommodation space 253 in the first direction Y, and enables the groove 2522 to communicate with the accommodation space 253, so that the protrusion part 244 of the insulating bracket 24 can extend from the accommodation space 253 into the groove 2522.

Optionally, the body part 243 and the protruding part 244 may be of an integrated structure or a split structure. If the body part 243 and the protrusion part 244 are of an integral structure, the protrusion part 244 and the body part 243 may be made by an integral molding process such as injection molding or extrusion molding to form the insulating bracket 24; and if the body part 243 and the protrusion part 244 are of a split structure, the protrusion part 244 may be connected to one end of the body part 243 in the first direction Y by bonding or snapping, etc. Exemplarily, in the embodiments of the present application, the body part 243 and the protruding part 244 may be of an integrated structure.

It should be noted that in the embodiment where the lead-out component 22 includes an electrode terminal 221 and a current collecting member 222, the first insulating member 25 is provided with two second protrusions 252 provided at an interval in the first direction Y, and an accommodating space 253 is formed between the two second protrusions 252, the current collecting member 222 is provided between the body part 243 of the insulating bracket 24 and the insulating body 251 of the first insulating member 25 in the thickness direction X of the first wall, so as to play the role of insulating and isolating the current collecting member 222 from the first wall 211 through the first insulating member 25.

The first surface 2521 of the second protrusion 252 facing the main body 231 is provided with the groove 2522, and the groove 2522 extends through one side of the second protrusion 252 in the first direction Y and communicates with the accommodation space 253, making the second protrusion 252 be of a stepped structure, so that the body part 243 of the insulating bracket 24 is accommodated in the accommodation space 253, and the protrusion part 244 of the insulating bracket 24 is provided to extend into the groove 2522, and the protrusion part 2544 abuts against the groove bottom surface of the groove 2522, thus the second protrusion 252 can play a certain limiting and positioning role on the insulating bracket 24 in the thickness direction X of the first wall, to improve the assembly quality between the insulating bracket 24 and the first insulating member 25, and facilitate reducing the assembling difficulty.

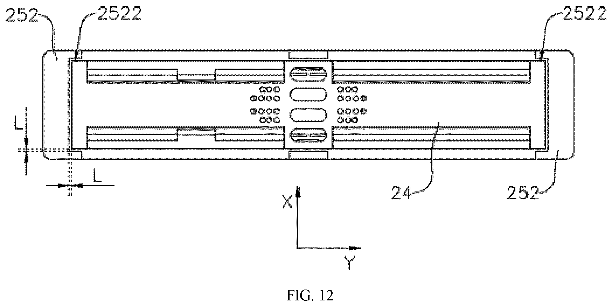

According to some embodiments of the present application, referring to FIG. 6, FIG. 10 and FIG. 11, and further referring to FIG. 12, FIG. 12 is a bottom view of an insulating bracket 24 being connected to a first insulating member 25, provided by some embodiments of the present application. The protrusion part 244 of the insulating bracket 24 is provided spaced apart from the groove side surface of the groove 2522, and the distance between the protrusion part 244 of the insulating bracket 24 and the groove side surface of the groove 2522 is L, satisfying 0.8mm≤L≤2mm.

In the above, the protrusion part 244 of the insulating bracket 24 is provided spaced apart from the groove side surface of the groove 2522. That is, in the direction perpendicular to the thickness direction X of the first wall, there is a gap between the protrusion part 244 of the insulating bracket 24 and the groove side surface of the groove 2522, and the size of the gap is 0.8mm to 2mm.

Exemplarily, the distance L between the protrusion part 244 of the insulating bracket 24 and the groove side surface of the groove 2522 may be 0.8mm, 1mm, 1.2mm, 1.5mm, 1.8mm or 2mm, etc.

The distance between the protrusion part 244 of the insulating bracket 24 and the groove side surface of the groove 2522 is set to be 0.8mm to 2mm, which on the one hand, can alleviate the phenomenon of too large assembling difficulty and too high assembly accuracy requirement of assembling the insulating bracket 24 into the accommodation space 253 and the groove 2522 caused by the too small distance between the protrusion part 244 of the insulating bracket 24 accommodated in the groove 2522 and the groove side surface of the groove 2522, facilitating reducing the assembly difficulty between the insulating bracket 24 and the first insulating member 25 to improve the assembly efficiency, and on the other hand, can alleviate the phenomenon of poor limiting and positioning effect of the groove 2522 on the insulating bracket 24 caused by too large distance between the protrusion part 244 of the insulating bracket 24 and the groove side surface of the groove 2522.

According to some embodiments of the present application, referring to what is shown in FIG. 4, FIG. 5 and FIG. 6, in the thickness direction x of the first wall, the lead-out component 22 is located at one side of the insulating bracket 24 away from the main body 231, and the tab 232 is bent around the insulating bracket 24 and connected to the lead-out component 22.

In the above, the lead-out component 22 includes an electrode terminal 221 and a current collecting member 222 connected with each other, the electrode terminal 221 is installed on the first wall 211, the current collecting member 222 is provided between the electrode terminal 221 and the insulating bracket 24 in the thickness direction X of the first wall, and the current collecting member 222 serves to connect the tab 232 and the electrode terminal 221, to realize electrical connection between the electrode assembly 23 and the electrode terminal 221.

The tab 232 is bent around the insulating bracket 24 and connected to the current collecting component 222 of the lead-out component 22, that is, the tab 232 is bent around the insulating bracket 24 from one end of the main body 231 and then connected to the current collecting component 222 located on the side of the insulating bracket 24 away from the main body 231, so as to reduce the phenomenon of the tab 232 being inserted invertedly into the main body 231, which is beneficial to reduce the short circuit risk of the battery cell 20.

Exemplarily, the tab 232 is bent around the body part 243 of the insulating bracket 24 and then connected to the current collecting member 222 of the lead-out component 22 to achieve electrical connection between the electrode assembly 23 and the electrode terminal 221.

It should be noted that in other embodiments, the tab 232 may also be provided as a structure that is not bent around the insulating bracket 24, that is, the tab 232 is located on the side of the insulating bracket 24 facing the main body 231 in the thickness direction X of the first wall. In this embodiment, the electrical connection between the current collecting member 222 and the tab 232 can be achieved by only making a connecting element connected between the current collecting member 222 and the tab 232. The connecting element may be a wire, a U-shaped connecting sheet or an L-shaped connecting sheet, etc.

The tab 232 is provided as a structure that is bent around the insulating bracket 24 and then connected to the lead-out component 22 to achieve electrical connection between the electrode assembly 23 and the lead-out component 22, thereby enabling the inputting or outputting of electrical energy for the battery cell 20. The battery cell 20 using this structure enables the portion of the tab 232 connected to the lead-out component 22 to be located on the side of the insulating bracket 24 away from the main body 231, thereby effectively alleviating the phenomenon of the tab 232 being invertedly inserted into the main body 231 of the electrode assembly 23 during assembly or use, which is beneficial to reduce the short circuit risk of the battery cell 20, thereby improving the use safety of the battery cell 20. In addition, since the insulating bracket 24 is fixedly connected to the lead-out component 22, the phenomenon that the insulating bracket 24 moves or displaces during use of the battery cell 20 can be effectively reduced, and further the risk of the insulating bracket 24 destroying the shape of the tab 232 or damaging the tab 232 due to movement can be effectively reduced, thereby alleviating the phenomenon of the short circuit between the tab 232 and other components or the connection failure between the electrode assembly 23 and the lead-out component 22, and facilitating improving the use safety and service life of the battery cell 20.

According to some embodiments of the present application, referring to what is shown in FIG. 3 and FIG. 4, the shell 21 includes a casing 212 and an end cover 213. An accommodating cavity with an opening 2121 is formed inside the casing 212, the electrode assemblies 23 are accommodated in the accommodating cavity, the end cover 213 seals the opening 2121, and the end cover 213 is the first wall 211.

In the above, the end cover 213 is the first wall 211. That is, the lead-out component 22 is connected to the end cover 213, and the first insulating member 25 and the insulating bracket 24 are provided between the end cover 213 and the main body 231 of the electrode assembly 23 in the thickness direction X of the first wall.

The first wall 211 for installing the lead-out component 22 is an end cover 213 for sealing the opening 2121 of the shell 212. The use of this structure makes it easy to assemble the lead-out component 22 on the first wall 211 and to connect the insulating bracket 24 to the lead-out component 22, so as to reduce the difficulty of assembling the battery cell 20, thereby facilitating improving the production efficiency of the battery cell 20.

It should be noted that the structure of the battery cell 20 is not limited to this. In some embodiments, the battery cell 20 may be in other structures. For example, the shell 21 includes a casing 212 and an end cover 213; the casing 212 includes a side wall and the first wall 211 which are integrally formed, the side wall is provided surrounding the first wall 211, the side wall has one end connected to the first wall 211 and the other end defining the opening 2121 in the thickness direction X of the first wall, the side wall and the first wall 211 jointly define the accommodation cavity for accommodating the electrode assemblies 23, and the end cover 213 seals the opening 2121. That is, the first wall 211 is the bottom wall of the casing 212 disposed opposite to the end cover 213 in the thickness direction X of the first wall. That is, the lead-out component is installed on the bottom wall of the casing 212 disposed opposite to the end cover 213 in the thickness direction X of the first wall.

In the above, the casing 212 includes a side wall and a first wall 211 which are integrally formed, that is, the casing 212 is made by an integral forming process, such as stamping, casting or extrusion molding. That is, the side wall and the first wall 211 of the casing 212 are of an integral structure.

The first wall 211 for installing the lead-out component 22 is a wall of the casing 212 arranged opposite to the end cover 213 in the thickness direction X of the first wall. The use of this structure can make the first wall 211 equipped with the lead-out component 22 away from the end cover 213 of the shell 21, so that there is no direct connection relationship between the first wall 211 and the end cover 213, thereby reducing the phenomenon that force generated when the lead-out component 22 pulls or twists the first wall 211 acts on the end cover 213, thereby reducing the risk of connection failure between the end cover 213 and the casing 212, and further reducing the risk of leakage of the battery cell 20 during use.

According to some embodiments of the present application, the present application further provides a battery 100, including at least one battery cell 20 of any solution above.

In the above, the battery 100 may include a box 10, and the at least one battery cell 20 is accommodated in the box 10.

Optionally, there may be one or more battery cells 20 accommodated in the box 10. Exemplarily, in FIG. 2, the battery 100 includes a plurality of battery cells 20, and the plurality of battery cells 20 are all accommodated in the box 10. The plurality of battery cells 20 may be in serial, parallel or hybrid connection with each other. The hybrid connection means that the plurality of battery cells 20 are connected with each other both in series and in parallel. The multiple battery cells 20 may be in direct serial, parallel or hybrid connection with each other, and then the whole composed of the multiple battery cells 20 is accommodated in the box 10.

According to some embodiments of the present application, the present application further provides an electric device, including at least one battery 100 of any solution above, where the battery 100 is used to provide electric energy for the electric device.

The electric device may be any of the aforementioned devices or systems using the battery 100.

According to some embodiments of the present application, referring to what is shown in FIG. 3 to FIG. 12, the present application provides a battery cell 20. The battery cell 20 includes a shell 21, lead-out components 22, electrode assemblies 23, an insulating bracket 24, first insulating members 25 and adhesive members 29. The shell 21 includes a casing 212 and an end cover 213. The casing 212 is provided thereinside with an accommodating cavity with an opening 2121, the electrode assemblies 23 are accommodated in the accommodating cavity 2121, the end cover 213 seals the opening 2121, and the end cover 213 is the first wall 211. The electrode assemblies 23 are accommodated in the shell 21. The electrode assembly 23 has a main body 231 and tabs 232. The tabs 232 are provided protruding from a first end of the main body 231 facing the first wall 211 in the thickness direction X of the first wall. The lead-out component 22 includes an electrode terminal 221 and a current collecting member 222, the first wall 211 is provided with lead-out holes 2111, the electrode terminal 221 is provided penetrating through the lead-out hole 2111, to connect the electrode terminal 221 to the first wall 211, the current collecting member 222 is located between the electrode terminal 221 and the insulating bracket 24 in the thickness direction X of the first wall, the current collecting member 222 is connected to the electrode terminal 221 and the tab 232, and the current collecting member 222 is connected with the electrode terminal 221 by welding to form the welding region 224. The first insulating member 25 includes an insulating body 251 and two second protrusions 252. In the thickness direction X of the first wall, the insulating body 251 is provided between the first wall 211 and the current collecting component 222 to insulate and isolate the first wall 211 from the current collecting component 222, and the second protrusion 252 is provided protruding from the side of the insulating body 251 facing the current collecting component 222, and the two second protrusions 252 are provided at an interval in the first direction Y to form the accommodation space 253 between the two second protrusions 252. In the thickness direction X of the first wall, the second protrusion 252 has a first surface 2521 facing the main body 231, the first surface 2521 is provided with a groove 2522, and in the first direction Y, the groove 2522 extends through the side of the second protrusion 252 facing the accommodation space 253 and communicates with the accommodation space 253. In the thickness direction X of the first wall, the insulating bracket 24 is provided between the current collecting member 222 and the main body 231, and the insulating bracket 24 includes a body part 243 and two protrusion parts 244. In the first direction Y, the two protrusion parts 244 protrude from two ends of the body part 243 respectively, and the first direction Y is perpendicular to the thickness direction X of the first wall. The body part 243 is accommodated in the accommodation space 253, the current collecting member 222 is located between the body part 243 and the insulating body 251 of the first insulating member 25, the protrusion part 244 extends from the accommodation space 253 into the groove 2522, and the protrusion part 244 abuts against the groove bottom surface of the groove 2522. The adhesive member 29 makes the main body 231 of the insulating bracket 24 bonded to the current collecting member 222 of the lead-out component 22, and the adhesive member 29 covers the welding region 224 formed by welding the electrode terminal 221 and the current collecting member 222 to each other. The body part 243 of the insulating bracket 24 is provided with a mounting hole 241, the mounting hole 241 extends through the insulating bracket 24 in the thickness direction X of the first wall, and the adhesive member 241 is partially accommodated in the mounting hole 241. The hole wall surface of the mounting hole 241 is provided with a limiting part 242. The limiting part 242 is at least partially embedded in the adhesive member 29. The limiting part 242 includes a separation body 2421 connected to the hole wall surface of the mounting hole 241, and the separation body 2421 is configured to separate the mounting hole 241 into a first hole segment 2411 and a second hole segment 2412 arranged in the thickness direction X of the first wall. The first hole segment 2411 is closer to the lead-out component 22 than the second hole segment 2412. The separation body 2421 is provided with a through hole 2421a extending in the thickness direction X of the first wall, and the through hole 2421a communicates with the first hole segment 2411 and the second hole segment 2412. The adhesive member 29 includes a first part 291, a second part 292 and a third part 293 which are arranged and connected in sequence in the thickness direction X of the first wall. The first part 291 is located in the first hole segment 2411 and is bonded to the current collecting member 222 of the lead-out component 22, the second part 292 is located in the through hole 2421a, and the third part 293 is located in the second hole segment 2412. In the thickness direction X of the first wall, the separation body 2421 is at least partially located between the first part 291 and the third part 293, and the third part 293 does not extend beyond the end of the second hole segment 2412 away from the separation body 2421, and the first part 291 extends out of the end of the first hole segment 2411 away from the separation body 2421. The limiting part 242 further includes a plurality of first protrusions 2422. The plurality of first protrusions 2422 are provided protruding from one side of the separation body 2421 facing the first hole section 2411 in the thickness direction X of the first wall, and are embedded in the adhesive member 29. The plurality of first protrusions 2422 provided at intervals in the circumferential direction of the through hole 2421a. In the above, in the thickness direction X of the first wall, the projection of the welding region 224 is located in the mounting hole 241, the adhesive member 29 completely cover the welding region 224, and the maximum size of the welding region 224 in the radial direction of the mounting hole 241 is D₁, and the diameter of the mounting hole 241 is D₂, satisfying: 1.5≤D₂/D₁≤2.5.

It should be noted that without conflict, the embodiments and the features of the embodiments in the present application may be combined with each other.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. A battery cell, comprising:
a shell, having a first wall;
lead-out components connected to the first wall;
at least one electrode assembly accommodated in the shell, wherein the at least one electrode assembly each has a main body and tabs, the tabs are provided protruding from one end of the main body facing the first wall, and the tabs are connected to the lead-out components; and
an insulating bracket, wherein in a thickness direction of the first wall, the insulating bracket is provided between the first wall and the main body, and the insulating bracket is fixedly connected to the lead-out components.

2. The battery cell according to claim 1, wherein the battery cell further comprises:
adhesive members bonding with the insulating bracket and the lead-out components to make the insulating bracket fixedly connected with the lead-out components.

3. The battery cell according to claim 2, wherein the insulating bracket is provided with mounting holes, the mounting holes extend through the insulating bracket in the thickness direction of the first wall, and the mounting holes are each configured to accommodate at least a part of the adhesive members.

4. The battery cell according to claim 3, wherein a hole wall surface of each of the mounting holes is provided with a limiting part, and at least a part of the limiting part is embedded in the corresponding adhesive member.

5. The battery cell according to claim 4, wherein the limiting part comprises a separation body connected to the hole wall surface of the corresponding mounting hole, and the separation body is configured to separate the corresponding mounting hole into a first hole segment and a second hole segment arranged in the thickness direction of the first wall, and the first hole segment is closer to the lead-out component than the second hole segment; and
the separation body is provided with a through hole extending in the thickness direction of the first wall, the through hole communicates with the first hole segment and the second hole segment, and the first hole segment, the through hole and the second hole segment each accommodate a part of the corresponding adhesive member.

6. The battery cell according to claim 5, wherein the adhesive members each comprise a first part, a second part, and a third part which are arranged and connected in sequence in the thickness direction of the first wall, the first part is located in the first hole segment and is bonded to the lead-out component, the second part is located in the through hole, and the third part is located in the second hole segment,
wherein in the thickness direction of the first wall, at least a part of the separation body is located between the first part and the third part.

7. The battery cell according to claim 6, where in the thickness direction of the first wall, a thickness of the third part is H, satisfying 0.5mm≤H≤5mm.

8. The battery cell according to claim 6 or 7, wherein in the thickness direction of the first wall, the third part does not extend beyond one end of the second segment away from the separation body.

9. The battery cell according to any one of claims 6 to 8, wherein in the thickness direction of the first wall, the first part extends beyond one end of the first hole segment away from the separation body.

10. The battery cell according to any one of claims 5 to 9, wherein the limiting part further comprises:
at least one first protrusion provided protruding from the separation body and embedded in the adhesive member,
wherein the at least one first protrusion is provided on at least one side of the separation body in the thickness direction of the first wall; and/or
the at least one first protrusion is provided on a hole wall surface of the through hole.

11. The battery cell according to claim 10, wherein in the thickness direction of the first wall, the at least one first protrusion is provided protruding from one side of the separation body facing the first hole segment.

12. The battery cell according to claim 10 or 11, wherein a plurality of first protrusions are provided protruding from the separation body, and the plurality of first protrusions are provided at intervals in a circumferential direction of the through hole.

13. The battery cell according to any one of claims 3 to 12, wherein the battery cell comprises two lead-out components with opposite polarities, the two lead-out components both being provided on the first wall; and
the insulating bracket is provided with two mounting holes, the two mounting holes are provided in one-to-one correspondence with the lead-out components, and the two mounting holes each accommodate therein the adhesive member.

14. The battery cell according to any one of claims 2 to 13, wherein the lead-out component comprises:
an electrode terminal connected to the first wall; and
a current collecting member, wherein in the thickness direction of the first wall, the current collecting member is located between the electrode terminal and the insulating bracket, and the current collecting member is connected to the electrode terminal and the corresponding tab,
wherein the adhesive member bonds with the current collecting member and the insulating bracket.

15. The battery cell according to claim 14, wherein the current collecting member is connected to the electrode terminal by welding to form a welding region, and the adhesive member covers at least a part of the welding region.

16. The battery cell according to claim 15, wherein the insulating bracket is provided with mounting holes, the mounting holes extend through the insulating bracket in the thickness direction of the first wall, and the mounting holes are configured to accommodate the adhesive members,
wherein in the thickness direction of the first wall, a projection of the welding region is located inside the corresponding mounting hole.

17. The battery cell according to claim 16, wherein a maximum size of the welding region in a radial direction of the mounting hole is D₁, and a diameter of the mounting hole is D₂, satisfying: 1.5≤D₂/D₁≤2.5.

18. The battery cell according to any one of claims 15 to 17, wherein in the thickness direction of the first wall, a surface of the welding region facing the adhesive member is a rough surface.

19. The battery cell according to any one of claims 14 to 18, wherein in the thickness direction of the first wall, a surface of the current collecting member bonded to the corresponding adhesive member is provided with a plurality of printed grooves, and the printed grooves are each configured to accommodate a part of the corresponding adhesive member.

20. The battery cell according to any one of claims 14 to 19, wherein the battery cell further comprises:
a first insulating member, wherein in the thickness direction of the first wall, at least a part of the first insulating member is provided between the first wall and the current collecting member to insulate and isolate the first wall from the current collecting member.

21. The battery cell according to claim 20, wherein the first insulating member comprises:
an insulating body, wherein in the thickness direction of the first wall, the insulating body is provided between the first wall and the current collecting member; and
two second protrusions, provided protruding from one side of the insulating body facing the current collecting member, wherein in a first direction, the two second protrusions are arranged at an interval, and an accommodation space is formed between the two second protrusions, the accommodation space is configured to accommodate at least a part of the insulating bracket, and the first direction is perpendicular to the thickness direction of the first wall.

22. The battery cell according to claim 21, wherein in the thickness direction of the first wall, the second protrusion has a first surface facing the main body, and the insulating bracket does not extend beyond the first surface.

23. The battery cell according to claim 21 or 22, wherein the insulating bracket comprises a body part and a protrusion part, the body part is accommodated in the accommodation space, and the protrusion part protrudes from at least one end of the body part in the first direction; and
in the thickness direction of the first wall, the second protrusion has a first surface facing the electrode assembly, and the first surface is provided with a groove, and in the first direction, the groove extends through the second protrusion and communicates with the accommodation space, the protrusion part extends into the groove, and abuts against a groove bottom surface of the groove.

24. The battery cell according to claim 23, wherein the protrusion part is provided spaced apart from the groove side surface of the groove, and a distance between the protrusion part and the groove side surface of the groove is L, satisfying 0.8mm≤L≤2mm.

25. The battery cell according to any one of claims 1 to 24, wherein in the thickness direction of the first wall, the lead-out components are located at one side of the insulating bracket away from the main body, and the tabs are bent around the insulating bracket and connected to the lead-out components.

26. The battery cell according to any one of claims 1 to 25, wherein the shell comprises:
a casing provided thereinside with an accommodation cavity with an opening, wherein the at least one electrode assembly is accommodated in the accommodation cavity; and
an end cover configured for sealing the opening,
wherein the end cover is the first wall.

27. The battery cell according to any one of claims 1 to 25, wherein the shell comprises:
a casing, comprising a side wall and the first wall which are integrally formed, wherein the side wall is provided surrounding the first wall, the side wall has one end connected to the first wall and the other end defining the opening in the thickness direction of the first wall, and the side wall and the first wall jointly define an accommodation cavity configured for accommodating the at least one electrode assembly; and
an end cover configured for sealing the opening.

28. A battery, comprising at least one battery cell each according to any one of claims 1 to 27.

29. An electric device, comprising at least one battery each according to claim 28.
